# EUROPEAN PATENT APPLICATION

(11) **EP 2 657 013 A1**
(43) Date of publication of application: **30.10.2013**
(21) Application number: 11850771.4
(22) Date of filing: 20.12.2011
(51) Int. Cl.: B32B 27/00

(54) **RESIN SUBSTRATE WITH A HARD COAT FILM AND PRODUCTION METHOD THEREOF**

(30) Priority: 21.12.2010 JP 2010284381
(71) Applicant: Asahi Glass Company, Limited, Tokyo 100-8405 (JP)
(72) Inventor: SHIBUYA, Takashi, Tokyo 100-8405 (JP); YAMAMOTO, Kyoko, Tokyo 100-8405 (JP); NAKAMURA, Yuki, Tokyo 100-8405 (JP)
(74) Representative: Müller-Boré & Partner Patentanwälte
(86) International application number: PCT/JP2011/079563
(87) International publication number: WO 2012/086659

(57) **Abstract**

An object is to provide a resin substrate provided with a hard coating film excellent in weather resistant adhesion and weather cracking resistance. A resin substrate 1 provided with a hard coating film, which comprises a resin substrate 2, and, formed on at least one surface thereof in order from the resin substrate 2 side, a primer layer 3 containing as the main components an acrylic polymer (P) and a silyl group-containing acrylic polymer (α), and a hard coating layer 4 containing as the main component a cured product of an organopolysiloxane, wherein the silyl group-containing acrylic polymer (α) has polymerized units derived from MMA, polymerized units having a hydrolysable silyl group and polymerized units having a hydroxyalkyl group, and the primer layer 3 further contains a modified product (X) obtained by reacting a silyl group-containing acrylic polymer (α) and a compound (β) having at least two crosslinkable functional groups reactive with hydroxy groups.

## Description

### TECHNICAL FIELD

The present invention relates to a resin substrate provided with a hard coating film and a process for its production.

### BACKGROUND ART

In recent years, as a window material for a vehicle such as an automobile and a window glass for a building material to be attached to a building construction such as a house or a building, demands for a transparent resin plate are increasing instead of a conventional inorganic glass plate.

Particularly, for a vehicle such as an automobile, for weight saving, use of a transparent resin plate as a window material has been proposed, and especially, an aromatic polycarbonate transparent resin plate is excellent in fracture resistance, transparency, light weight properties, easy processability, etc., and its use has been studied as a promising window material for a vehicle. However, such a transparent resin plate has had problems with respect to the abrasion resistance or weather resistance when it is used in place of an inorganic glass plate.

Therefore, it has been proposed to form a coating film on the surface of a transparent resin plate by means of various hard coating agents, particularly silicone type hard coating agents, for the purpose of improving the abrasion resistance and weather resistance of the transparent resin plate. Further, it has also been studied to interpose an adhesive layer such as a primer layer in such a case in order to improve the adhesion between the hard coating layer and the transparent resin plate.

Such a transparent resin plate is required to have high durability even in a high temperature environment or against an environmental change.

Therefore, for the purpose of improving durability or hot water resistance in a high temperature environment, Patent Document 1 (JP-A-2004-26934) proposes such a hard coating film that a thermosetting acrylic resin layer containing a silane coupling agent and an acrylic copolymer crosslinked with e.g. a polyisocyanate compound, and a silicone type hard coating layer containing a cured product of an organosiloxane resin composition, are laminated on a transparent plastic substrate.

Further, Patent Document 2 (JP-A-2006-240294) discloses that in a coating member having a primer layer and a hard coating layer laminated on a resin substrate, for the purpose of improving the cracking resistance or adhesion of the coating film, a flexibility-imparting agent is added to the hard coating layer, and at the same time, a thermosetting acrylic resin having an ultraviolet absorber copolymerized and a thermoplastic acrylic resin are incorporated to the primer layer.

However, with the hard coating film and the coating member proposed in Patent Documents 1 and 2, the adhesion between the primer layer and the silicone type hard coating layer is inadequate in a high humidity environment, and particularly in a case where an accelerated weather resistance test is carried out under severe ultraviolet irradiation and humidity conditions, there has been a problem such that peeling or cracking is likely to result between the primer layer and the hard coating layer.

### PRIOR ART DOCUMENTS

### PATENT DOCUMENTS

- Patent Document 1:: JP-A-2004-26934
- Patent Document 2:: JP-A-2006-240294

### DISCLOSURE OF INVENTION

### TECHNICAL PROBLEM

The present invention has been made to solve the above-described problem of the prior art, and it is an object of the present invention to provide a resin substrate provided with a hard coating film, wherein a silicone type hard coating layer is formed on a resin substrate provided with a hard coating film via a primer layer, which is excellent not only in abrasion resistance but also in weather resistance such as adhesion after an accelerated weather resistance test (hereinafter referred to also as "weather resistant adhesion"), cracking resistance after a weather resistance test (hereinafter referred to also as "weather cracking resistance"), etc.

### SOLUTION TO PROBLEM

The resin substrate provided with a hard coating film of the present invention is a resin substrate provided with a hard coating film, which comprises a resin substrate, and, formed on at least one surface of the resin substrate in order from the resin substrate side, a primer layer containing as the main component an acrylic polymer (P) and a hard coating layer containing as the main component a cured product of an organopolysiloxane, wherein the acrylic polymer (P) is constituted by polymerized units derived from an alkyl methacrylate having a C₁₋₆ alkyl group, and from 90 to 100 mol% in all polymerized units constituting the acrylic polymer (P) is polymerized units derived from methyl methacrylate; the primer layer further contains a modified product (X) obtained by reacting a silyl group-containing acrylic polymer (α) and a compound (β) having at least two crosslinkable functional groups reactive with hydroxy groups; and the silyl group-containing acrylic polymer (α) has polymerized units derived from methyl methacrylate (MMA), polymerized units having a hydrolysable silyl group and/or a SiOH group and polymerized units having a hydroxyalkyl group, and from 50 to 95 mol% in all polymerized units constituting the silyl group-containing acrylic polymer (α), is polymerized units derived from methyl methacrylate (MMA).

Further, the resin substrate provided with a hard coating film is a resin substrate provided with a hard coating film, which comprises a resin substrate, and, formed on at least one surface of the resin substrate in order from the resin substrate side, a primer layer containing as the main components an acrylic polymer (P) and a silyl group-containing acrylic polymer (α), and a hard coating layer containing as the main component a cured product of an organopolysiloxane, wherein the acrylic polymer (P) is constituted by polymerized units derived from an alkyl methacrylate having a C₁₋₆ alkyl group, and from 90 to 100 mol% in all polymerized units constituting the acrylic polymer (P) is polymerized units derived from methyl methacrylate; the silyl group-containing acrylic polymer (α) has polymerized units derived from methyl methacrylate (MMA), polymerized units having a hydrolysable silyl group and/or a SiOH group and polymerized units having a hydroxyalkyl group, and from 50 to 95 mol% in all polymerized units constituting the silyl group-containing acrylic polymer (α), is polymerized units derived from methyl methacrylate (MMA); and the primer layer further contains a modified product (X) obtained by reacting a silyl group-containing acrylic polymer (α) and a compound (β) having at least two crosslinkable functional groups reactive with hydroxy groups.

The silyl group-containing acrylic polymer (α) preferably contains polymerized units having a hydrolysable silyl group and/or a SiOH group in a proportion of from 0.5 to 49.5 mol% in all polymerized units constituting the silyl group-containing acrylic polymer (α). Further, the silyl group-containing acrylic polymer (α) preferably contains polymerized units having a hydroxyalkyl group in a proportion of from 0.5 to 30 mol% in all polymerized units constituting the silyl group-containing acrylic polymer (α).

The polymerized units having a hydrolysable silyl group and/or a SiOH group are preferably polymerized units wherein the hydrolysable silyl group and/or the SiOH group is bonded to a side chain via a C-Si bond. Further, the silyl group-containing acrylic polymer (α) preferably does not contain polymerized units having an aromatic hydrocarbon group in a side chain. The silyl group-containing acrylic polymer (α) preferably has a mass average molecular weight of from 5,000 to 300,000.

The crosslinkable functional groups are preferably at least one member selected from the group consisting of isocyanate groups, carbodiimide groups and epoxy groups. Further, the modified product (X) is preferably one obtainable by reacting some of hydroxyalkyl groups in the polymerized units having a hydroxyalkyl group and the crosslinkable functional groups in the compound (β) having at least two crosslinkable functional groups reactive with hydroxy groups. Further, the primer layer preferably contains a crosslinked product having at least two modified products (X) crosslinked by a reaction of hydroxyalkyl groups contained in one modified product (X) and the crosslinkable functional groups contained in another modified product (X).

The acrylic polymer (P) as the main component of the primer layer preferably has a mass average molecular weight of from 20,000 to 1,000,000. The content of the acrylic polymer (P) as the main component of the primer layer is preferably from 50 to 98 mass% in the primer layer.

The primer layer preferably has a thickness of from 0.1 µm to 7 µm. Further, the hard coating layer preferably has a thickness of from 0.1 µm to 10 µm.

The process for producing a resin substrate provided with a hard coating film, is a process for producing a resin substrate provided with a hard coating film, which comprises a step of applying and drying, on at least one surface of a resin substrate, a primer layer-forming composition comprising as the main components an acrylic polymer (P) and a silyl group-containing acrylic polymer (α), to form a primer layer, and a step of applying and curing, on the primer layer, a hard coating layer-forming composition comprising as the main component an organopolysiloxane, to form a hard coating layer, wherein the acrylic polymer (P) is constituted by polymerized units derived from an alkyl methacrylate having a C₁₋₆ alkyl group, and from 90 to 100 mol% in all polymerized units constituting the acrylic polymer (P) is polymerized units derived from methyl methacrylate; the silyl group-containing acrylic polymer (α) has polymerized units derived from methyl methacrylate (MMA), polymerized units having a hydrolysable silyl group and/or a SiOH group and polymerized units having a hydroxyalkyl group, and from 50 to 95 mol% in all polymerized units constituting the silyl group-containing acrylic polymer (α), is polymerized units derived from methyl methacrylate (MMA); and the primer layer-forming composition further contains a modified product (X) obtained by reacting a silyl group-containing acrylic polymer (α) and a compound (β) having at least two crosslinkable functional groups reactive with hydroxy groups. Further, the process for producing a resin substrate provided with a hard coating film is capable of producing the resin substrate provided with a hard coating film of the present invention.

In this specification, a "hard coating film" means a multilayered coating film including a hard coating layer formed on a resin substrate. That is, in the present invention, the entire coating film comprising the primer layer and the hard coating layer is referred to as a "hard coating film".

A "hydrolyzable silyl group" means a silyl group having a hydrolyzable group bonded directly to a silicon atom. Here, the "hydrolyzable group" is a group which becomes a hydroxy group (a -OH group) by hydrolysis. Accordingly, "a hydrolyzable silyl group and/or a SiOH group" means a silyl group having a hydrolyzable group bonded to a silicon atom including one partially hydrolyzed to a hydroxy group (a -OH group). Further, "a hydrolyzable silyl group and/or a SiOH group" may be expressed as "at least one group selected from the group consisting of a hydrolyzable silyl group and a SiOH group". Specific examples of the hydrolyzable group will be described in detail hereinafter.

### ADVANTAGEOUS EFFECTS OF INVENTION

The resin substrate provided with a hard coating film of the present invention is excellent in abrasion resistance and also excellent in weather resistance such as weather resistant adhesion, weather cracking resistance, etc. Further, according to the process for producing a resin substrate having a hard coating film of the present invention, it is possible to obtain a resin substrate having a hard coating film, which is excellent in abrasion resistance and also excellent in weather resistance such as weather resistant adhesion, weather cracking resistance, etc.

### BRIEF DESCRIPTION OF DRAWING

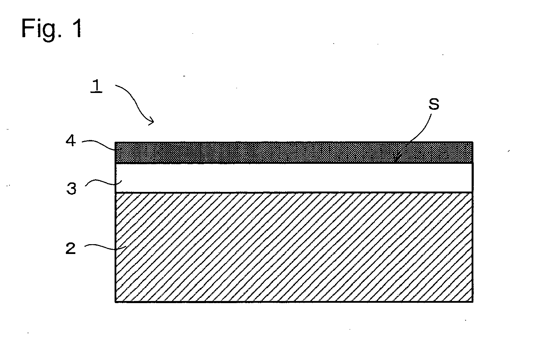

Fig. 1 is a cross-sectional schematic view illustrating the resin substrate provided with a silicone type hard coating film of the present invention.

### DESCRIPTION OF EMBODIMENT

Now, the present invention will be described in detail.

An embodiment of the resin substrate provided with a hard coating film of the present invention is shown in Fig. 1. In this resin substrate 1 provided with a hard coating film, on at least one surface of a resin substrate 2, a primer layer 3 containing as the main component an acrylic polymer (P) and a hard coating layer 4 containing as the main component a cured product of an organopolysiloxane, are laminated in this order.

In the resin substrate provided with a hard coating film of the present invention, the primer layer contains an acrylic polymer (P), whereby the adhesion between the resin substrate 2 and the hard coating layer 4 can be improved. Further, the acrylic polymer (P) is a thermoplastic resin, and it has high toughness as compared with a crosslinked polymer and is excellent in the followability to deformation of the resin substrate 2, whereby it is considered that drawbacks are less likely to be found in the durability test.

Further, in the resin substrate provided with a hard coating film of the present invention, in the primer layer, a primer layer 3 containing a modified product (X) obtained by reacting a silyl group-containing acrylic polymer (α) having a hydrolyzable silyl group bonded thereto and a compound (β) having a crosslinkable functional group, is provided, whereby the abrasion resistance of the hard coating film is good, and at the same time, it is excellent also in weather resistance such as weather resistant adhesion, weather cracking resistance, etc. attributable to the hard coating layer 4.

That is, hydrolyzable silyl groups in the silyl group-containing acrylic polymer (α) contained in the primer layer 3 will react with curable terminal groups (e.g. Si-OX (wherein -OX is a hydroxy group or an alkoxy group)) of the organopolysiloxane (T units) constituting the hard coating layer 4 to form siloxane bonds (-O-Si-O-), whereby the adhesion, particularly weather resistant adhesion, between the primer layer 3 and the hard coat layer 4 will be improved. And, since such a primer layer 3 excellent in the adhesion is provided, the coating film is excellent in weather resistance such as weather resistant adhesion, weather cracking resistance, etc. attributable to the hard coating layer 4.

Now, the respective layers to constitute the resin substrate provided with a hard coating film of the present invention will be described in detail.

### (1) Resin substrate

The resin as the material for the resin substrate to be used in the present invention may be a thermoplastic resin such as a polycarbonate resin, a polystyrene resin, an aromatic polyester resin, an acrylic resin, a polyester resin, a polyarylate resin, a polycondensate of halogenated bisphenol A with ethylene glycol, an acrylic urethane resin or a halogenated aryl group-containing acrylic resin.

Among them, a polycarbonate resin such as an aromatic polycarbonate resin, an acrylic resin such as a polymethyl methacrylate type acrylic resin is preferred, and a polycarbonate resin is more preferred. Further, among polycarbonate resins, a bisphenol A-type polycarbonate resin is particularly preferred. Further, the resin substrate may contain two or more of the above thermoplastic resins, or it may be a laminate substrate having two or more layers laminated by using such resins. Further, the shape of the resin substrate is not particularly limited, and it may be a flat plate or curved. The color of the resin substrate is preferably colorless transparent or colored transparent.

### (2) Primer layer

The resin substrate provided with a hard coating film of the present invention has a primer layer 3 containing as the main component an acrylic polymer (P) on at least one surface of the resin substrate 2. The primer layer 3 is a layer provided to improve the adhesion between the resin substrate 2 and the after-described hard coating layer 4 and is directly bonded to the resin substrate 2, whereby the adhesion with the resin substrate 2 is secured.

The primer layer 3 in the resin substrate provided with a hard coating film in the present invention contains as the main components the acrylic polymer (P) and the after-described silyl group-containing acrylic polymer (α), and further contains a modified product (X) obtained by reacting such a silyl group-containing acrylic polymer (α) and a compound (β) having crosslinkable functional groups.

As the acrylic polymer (P) as the main component constituting the primer layer, a homopolymer or copolymer comprising a monomer having a methacryl group (such as a methacrylate) as monomer units, may be used. Specifically, as the acrylic polymer (P), a homopolymer or copolymer made of an alkyl methacrylate having a C₁₋₆ alkyl group as a monomer and containing from 90 to 100 mol% of polymerized units derived from methyl methacrylate, is used.

That is, the acrylic polymer (P) may be a homopolymer comprising methyl methacrylate as monomer units or a copolymer comprising methyl methacrylate and an alkyl methacrylate having a C₂₋₆ alkyl group as monomer units, so long as it is one which contains from 90 to 100 mol% of polymerized units derived from methyl methacrylate.

In this specification, the term "(meth)acryl ..." in e.g. a (meth)acrylate means both "acryl ..." and "methacryl ...".

As the acrylic polymer (P) for the primer to be used in the present invention, preferred is a homopolymer or copolymer obtainable by polymerizing as the main monomer at least one member selected from the group consisting of alkyl methacrylates having from 1 to 6 carbon atoms in the alkyl group, particularly from the group consisting of methyl methacrylate, n-butyl methacrylate, tert-butyl methacrylate, ethyl methacrylate, isobutyl methacrylate, etc. Further, more preferred is a homopolymer of methyl methacrylate, tert-butyl methacrylate, ethyl methacrylate or the like (i.e. polymethyl methacrylate, polytert-butyl methacrylate or polyethyl methacrylate) or a copolymer of methyl methacrylate with at least one member selected from the group consisting of n-butyl methacrylate, ethyl methacrylate and isobutyl methacrylate.

Further, such an acrylic polymer (P) to be used for forming the primer layer preferably has a mass average molecular weight Mw of at least 20,000, more preferably at least 50,000 and preferably at most 1,000,000. An acrylic polymer (P) having a mass average molecular weight Mw within such a range is preferred, since the performance such as adhesion or strength as the primer layer is thereby sufficiently obtainable. In this specification, the mass average molecular weight Mw is a value measured by using polystyrene as a standard substance by a gel permeation chromatography method.

Further, such an acrylic polymer (P) is also commercially available, and in the present invention, such commercial products, for example, DIANAL LR269 (tradename, polymethyl methacrylate (PMMA), manufactured by Mitsubishi Rayon Co., Ltd., mass average molecular weight: 100,000), LR248 (tradename, polymethyl methacrylate (PMMA), manufactured by Mitsubishi Rayon Co., Ltd., mass average molecular weight: 155,000), etc. which are commercially available in the form of solutions as preliminarily dissolved in proper solvents, may be used. Or, an acrylic polymer such as DIANAL BR80 (tradename, polymethyl methacrylate (PMMA), manufactured by Mitsubishi Rayon Co., Ltd., mass average molecular weight: 90,000), DIANAL BR88 (tradename, polymethyl methacrylate (PMMA), manufactured by Mitsubishi Rayon Co., Ltd., mass average molecular weight: 430,000), or M-4003 (tradename, polymethyl methacrylate (PMMA), manufactured by Negami Chemical Industrial Co., Ltd., mass average molecular weight: 700,000-1,300,000) may be used by dissolving it in a suitable solvent. Further, two or more of such acrylic polymers may be used by mixing them.

By incorporating the above acrylic polymer (P) together with the modified product (X) which will be described in detail hereinafter, to the primer layer 3, thermal deformation of the primer layer 3 at a high temperature can be suppressed, and it is possible to improve the weather resistance of the primer layer 3.

The content of the acrylic polymer (P) as the main component in the primer layer 3 is preferably from 50 to 98 mass%. If the content of the acrylic polymer (P) as the main component is less than 50 mass%, the toughness of the primer layer 3 tends to be low, and it tends to be difficult for the primer layer 3 to follow the movement of the substrate, whereby a stress is likely to be formed, and cracking or the like is likely to occur. On the other hand, if the content of the acrylic polymer (P) exceeds 98 mass%, siloxane bonds (-O-Si-O-) may not sufficiently be formed between the primer layer 3 and the hard coating layer 4, whereby it tends to be difficult to sufficiently improve the adhesion with the hard coating layer 3.

In the present invention, the primer layer-forming composition containing as the main component the acrylic polymer (P), contains the acrylic polymer in an amount of at least 50%, preferably from 50 to 98%, based on the total amount of the respective components of the primer layer-forming composition excluding a solvent.

As mentioned above, the primer layer 3 contains the modified product (X) obtained by reacting the silyl group-containing acrylic polymer (α) and the compound (β) having crosslinkable functional groups.

The silyl group-containing acrylic polymer (α) has polymerized units (α1) having a hydrolyzable silyl group and/or a SiOH group, polymerized units (α2) having a hydroxyalkyl group (hereinafter sometimes referred to as a C-OH group) and polymerized units (α3) derived from methyl methacrylate.

The silyl group-containing acrylic polymer (α) preferably has hydrolyzable silyl groups and/or SiOH groups of polymerized units (α1), as well as hydroxyalkyl groups of polymerized units (α2), in its side chains.

Here, in the silyl group-containing acrylic polymer (α), it is considered that siloxane bonds are formed by a reaction of hydrolyzable silyl groups and/or SiOH groups contained in this silyl group-containing acrylic polymer (α), or by a reaction between hydrolyzable silyl groups and/or SiOH groups of the polymer (α), and hydrolyzable silyl groups and/or SiOH groups of the organopolysiloxane constituting the after-described hard coating layer. Accordingly, the expression "the primer layer contains a silyl group-containing acrylic polymer (α), and this silyl group-containing acrylic polymer (α) contains polymerized units having a hydrolyzable silyl group and/or a SiOH group" is meant to include a case where hydrolyzable silyl groups and/or SiOH groups form siloxane bonds.

Further, this silyl group-containing acrylic polymer (α) does not contain polymerized units having an aromatic hydrocarbon group. That is, it preferably does not have a structure wherein a monomer having an aromatic hydrocarbon group like an ultraviolet absorbing group is copolymerized.

The polymerized unit (α1) having a hydrolyzable silyl group and/or a SiOH group is preferably one wherein a hydrolyzable silyl group and/or a SiOH group is bonded via C-Si bond to a side chain of a hydrocarbon group as the main chain of the acrylic polymer.

Such a polymerized unit (α1) can be obtained by polymerization or copolymerization of (A) an acrylic monomer (a silyl group-containing acrylic monomer) having a hydrolyzable silyl group and/or a SiOH group bonded via a C-Si bond and may be regarded as a polymerized unit derived from a silyl group-containing acrylic monomer.

Whereas, the polymerized unit (α2) having a hydroxyalkyl group (a C-OH group) is preferably one wherein a C-OH group is bonded to a side chain. Such a polymerized unit (α2) can be obtained by polymerization or copolymerization of (B) an acrylic monomer having a hydroxyalkyl group (a C-OH group) and may be regarded as a polymerized unit derived from an acrylic monomer having a C-OH group.

Further, by modifying some of the C-OH group-containing polymerized units thus obtained by an after-described method, it is possible to obtain polymerized units (α1) having a hydrolyzable silyl group.
(A) As the silyl group-containing acrylic monomer (i.e. an acrylic monomer having a hydrolyzable silyl group bonded via a C-Si bond), a monomer having at least one hydrolyzable silyl group bonded via a C-Si bond and having one acryl group or methacryl group in one molecule, may be used without any particular limitation. Particularly preferred is a monomer having a hydrolyzable silyl group and having a methacryl group.

The hydrolyzable silyl group is a group having a hydrolyzable group bonded directly to a silicon atom of a silyl group. That is, it is a group having a hydrogen atom of a silyl group (-SiH₃) substituted by a hydrolyzable group. Here, as mentioned above, the hydrolyzable group represents a group which becomes a hydroxy group (a -OH group) by hydrolysis, and specifically, an alkoxy group such as a methoxy group, an ethoxy group, a propoxy group, an isopropoxy group, a butoxy group, an isobutoxy group, a sec-butoxy group or a tert-butoxy group, an acyloxy group such as a phenoxy group or an acetyloxy group, an oxime group such as a butanoxime group, an amino group such as an amino group or a methylamino group, or a halogen group such as a chlorine group, may be mentioned. From the viewpoint of availability and easy control of hydrolyzability, an alkoxy group such as a methoxy group or an ethoxy group is preferred. As a substituent other than the above hydrolyzable group, an alkyl group such as a methyl group, an ethyl group, a propyl group, a hexyl group or a decyl group, or a phenyl group, may, for example, be exemplified. From the viewpoint of availability, it is preferred to employ a methyl group or an ethyl group.
(B) The acrylic monomer having a C-OH group may, for example, be 2-hydroxyethyl (meth)acrylate (also called (meth)acrylic acid 2-hydroxyethyl), 2-hydroxypropyl (meth)acrylate, hydroxydiethylene glycol (meth)acrylate, polyethylene glycol mono(meth)acrylate or polypropylene glycol mono(meth)acrylate.
   Further, the silyl group-containing acrylic polymer (α) may have polymerized units derived from (C) a copolymerizable acrylic monomer other than the above-mentioned (A) silyl group-containing acrylic monomer, (B) acrylic monomer having a C-OH group and methyl methacrylate (MMA).
(C) As such another copolymerizable acrylic monomer, an acrylate or methacrylate having a C₂₋₁₈ alkyl group, an acrylate or methacrylate having a cycloalkyl group having at most 12 carbon atoms, or an acrylate or methacrylate having an epoxy group, specifically glycidyl methacrylate, may be used. (C) As such another copolymerizable acrylic monomer, one type may be used alone, or two or more types may be used in combination. Among them, an acrylate or methacrylate having a linear alkyl group having from 2 to 16 carbon atoms is preferred, and specifically, ethyl methacrylate (EMA), n-butyl methacrylate (BMA), decyl methacrylate (DMA), lauryl methacrylate (LMA) or cetyl methacrylate (CMA) may, for example, be mentioned. As compared with a branched alkyl group, a linear alkyl group has high compatibility with polymethyl methacrylate as the main component of the primer layer, and thus, it is suitable as a monomer for the silyl group-containing acrylic polymer (α), and it becomes possible to properly control the glass transition temperature (Tg) of the polymer by the length of the linear chain.

The content of polymerized units having a hydrolyzable silyl group and/or a SiOH group (hereinafter sometimes referred to as silyl group-containing polymerized units) (α1) is preferably from 0.5 to 49.5 mol% in all polymerized units constituting the silyl group-containing acrylic polymer (α).

If the content of the silyl group-containing polymerized units (α1) is less than 0.5 mol%, the reaction between hydrolyzable silyl groups of such polymerized units and siloxane units (T units) of the organopolysiloxane constituting the after-described hard coating layer tends to be inadequate, and the effect to improve the adhesion with the hard coating layer may not sufficiently be obtainable. On the other hand, if polymerized units based on the silyl group-containing polymerized units (α1) exceed 49.5 mol%, unreacted hydrolyzable groups are likely to remain, and post crosslinking is likely to take place as the time passes, whereby cracking is likely to occur. Further, the polymerized units (α3) derived from methyl methacrylate (MMA) necessarily become not higher than 50 mol%, whereby the affinity (compatibility) with the primer layer is likely to be poor.

The content of the polymerized units having a hydroxyalkyl group (a C-OH group) (hereinafter sometimes referred to as C-OH group-containing polymerized units) (α2) is preferably from 0.5 to 30 mol% in all polymerized units constituting the silyl group-containing acrylic polymer (α).

If the content of the C-OH group-containing polymerized units (α2) is less than 0.5 mol%, it tends to be difficult to sufficiently increase the compatibility of the silyl group-containing acrylic polymer (α) with the hard coating layer. On the other hand, if the content of the C-OH group-containing polymerized units (α2) exceeds 30 mol%, the compatibility of the silyl group-containing acrylic polymer (α) with the hard coating layer tends to be excessively high, and the after-described hard coating layer-forming composition is likely to be dissolved into the primer layer to deteriorate the adhesion between the substrate and the primer layer.

Furthermore, in a case where the silyl group-containing acrylic polymer (α) contains the above-mentioned polymerized units derived from (C) another copolymerizable acrylic monomer, the content of such polymerized units is preferably from 0 to 40 mol% in the total number of polymerized units constituting the silyl group-containing acrylic polymer (α).

In the silyl group-containing acrylic polymer (α), the content of the polymerized units (α3) derived from methyl methacrylate (MMA) is from 50 to 95 mol% in all polymerized units constituting the silyl group-containing acrylic polymer (α).

If the content of the polymerized units (α3) derived from methyl methacrylate (MMA) is less than 50 mol%, the compatibility between the silyl group-containing acrylic polymer (α) and the acrylic polymer (P) as the main component of the primer layer is likely to be low. On the other hand, if the content of the polymerized units (α3) derived from methyl methacrylate (MMA) exceeds 95 mol%, the proportion of the polymerized units (α1) having a hydrolyzable silyl group tends to be low, and the adhesion between the primer layer and the hard coating layer is likely to be inadequate.

A particularly preferred copolymer composition of the silyl group-containing acrylic polymer (α) comprises from 60 to 95 mol% of the polymerized units (α3) derived from methyl methacrylate (MMA), from 0.5 to 15 mol% of the silyl group-containing polymerized units (α1), from 0.5 to 15 mol% of the C-OH group-containing polymerized units (α2), and from 0 to 35 mol% of the polymerized units derived from (C) another copolymerizable acrylic monomer.

An example of the copolymer composition of the silyl group-containing acrylic polymer (α) is shown by the following formula (1). This silyl group-containing acrylic polymer (α) has polymerized units (α1) derived from 3-methacryloxypropyltrimethoxysilane as (A) a silyl group-containing acrylic monomer, polymerized units (α2) derived from 2-hydroxyethyl methacrylate (HEMA) as (B) an acrylic monomer having a C-OH group, polymerized units (α3) derived from methyl methacrylate (MMA), polymerized units derived from lauryl methacrylate (LMA) as (C) another copolymerizable acrylic monomer, and polymerized units derived from N-butyl methacrylate (BMA).

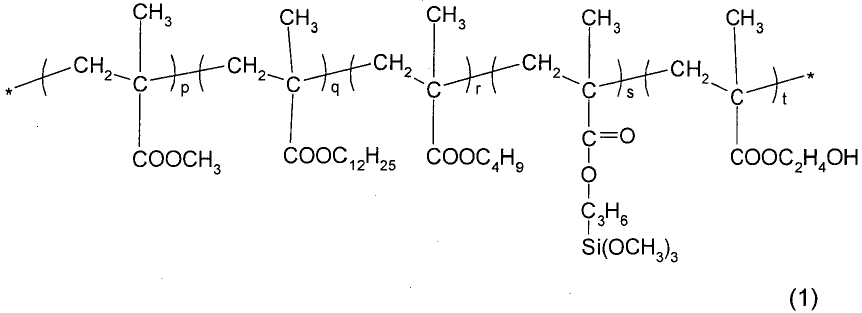

In the composition formula of formula (1), p, q, r, s and t respectively represent the ratios in number (molar ratios) of polymerized units derived from methyl methacrylate (MMA), polymerized units derived from lauryl methacrylate (LMA), polymerized units derived from n-butyl methacrylate (BMA), polymerized units derived from 3-methacryloxypropyltrimethoxysilane and polymerized units derived from 2-hydroxyethyl methacrylate (HEMA), and p+q+r+s+t=100 is satisfied.

In p, q, r, s and t, the molar ratio p of the polymerized units derived from methyl methacrylate (MMA) is preferably from 50 to 95. Further, the molar ratio s of the polymerized units derived from 3-methacryloxypropyltrimethoxysilane as (A) a silyl group-containing acrylic monomer is preferably from 0.5 to 49.5, and the molar ratio t of the polymerized units derived from 2-hydroxyethyl methacrylate (HEMA) as (B) a C-OH group-containing acrylic monomer is preferably from 0.5 to 30. Further, the molar ratios q and r of the polymerized units of lauryl methacrylate (LMA) and n-butyl methacrylate (BMA) as (C) another copolymerizable acrylic monomer, are preferably from 0 to 20 and from 0 to 30, respectively, and preferably from 0 to 40 in total.

### [Method 1]

The silyl group-containing acrylic polymer (α) may, for example, be obtained by the following method (Method 1).

That is, the silyl group-containing acrylic polymer (α) can be obtained by adding a radical polymerization initiator selected from a peroxide such as dicumyl peroxide or benzoyl peroxide, or an azo compound such as 2,2'-azobis(isobutyronitrile) to a solution containing monomer components comprising (A) a silyl group-containing acrylic monomer having a hydrolyzable silyl group and/or a SiOH group, (B) an acrylic monomer having a hydroxyalkyl group (a C-OH group) and methyl methacrylate (MMA) and further, as the case requires, (C) another copolymerizable acrylic monomer, and reacting them under heating (from 40 to 150°C, particularly from 50 to 120°C for from 1 to 10 hours, particularly from 3 to 8 hours).
(A) The silyl group-containing acrylic monomer having a hydrolyzable silyl group and/or a SiOH group to be used in the copolymerization reaction by such Method 1, may, for example, be 3-methacryloxypropyltrimethoxysilane, 3-methacryloxypropylmethyldimethoxysilane, 3-methacryloxypropyldimethylmethoxysilane, 3-methacryloxypropyltriethoxysilane, 3-methacryloxypropylmethyldiethoxysilane, 3-acryloxypropyltrimethoxysilane or 3-acryloxypropylmethyldimethoxysilane. Among them, 3-methacryloxypropyltrimethoxysilane or 3-methacryloxypropylmethyldimethoxysilane is particularly preferred from the viewpoint of e.g. availability, handling efficiency, the crosslinking density and the reactivity.

### [Method 2]

Further, the silyl group-containing acrylic polymer (α) may be obtained also by the following method (Method 2).

### (1) Preparation of first acrylic polymer (intermediate)

A first acrylic polymer (intermediate) can be obtained by adding a radical polymerization initiator selected from a peroxide such as dicumyl peroxide or benzoyl peroxide, or an azo compound such as 2,2'-azobis(isobutyronitrile) to a solution containing monomer components comprising (B) an acrylic monomer having a C-OH group and methyl methacrylate (MMA), and further, as the case requires (C) another copolymerizable acrylic monomer, and reacting them under heating (from 40 to 150°C, particularly from 50 to 120°C for from 1 to 10 hours, particularly from 3 to 8 hours).

Here, with respect to methyl methacrylate (MMA) and (C) another copolymerizable acrylic monomer, the numbers of polymerized units derived from them, respectively, constitute the composition of the respective polymerized units (molar ratios) in the finally obtainable silyl group-containing acrylic polymer (α), and therefore, these monomers are blended to constitute the copolymer composition in the silyl group-containing acrylic polymer (α).

Thus, a first acrylic polymer is obtainable which is a copolymer having polymerized units (α2) containing a C-OH group derived from (B) a C-OH group-containing acrylic monomer, polymerized units (α3) derived from methyl methacrylate (MMA) and polymerized units derived from (C) another copolymerizable acrylic monomer.

Such a first acrylic polymer is also commercially available, and in the present invention, a commercial product, for example, a hydroxyalkyl group-containing acrylic polymer JR4811 (tradename, manufactured by Mitsubishi Rayon Co., Ltd., molar ratios of polymerized units derived from methyl methacrylate (MMA), polymerized units derived from lauryl methacrylate (LMA), polymerized units derived from n-butyl methacrylate (BMA) and polymerized units derived from hydroxyethyl methacrylate (HEMA) are 67:3:21:9, Mw 16,000) may be used. Here, the mass average molecular weight Mw of JR4811 was obtained by gel permeation chromatography (GPC, HLC-8220GPC manufactured by TOSOH CORPORATION, RI detection, column: TSKguardcolum SuperHZ-L+TSKgel SuperHZ4000+HZ3000+HZ2500+HZ2000, eluent: THF), and the polymerized units constituting JR4811 and their molar ratios were obtained by a nuclear magnetic resonance analysis (¹³C-NMR, ECA600 manufactured by JEOL Ltd.) as dissolved in deuterated chloroform.

### (2) Preparation of silyl group-containing acrylic polymer (α)

To the first acrylic polymer, a compound having at least one (preferably one) hydrolyzable silyl group and at least one (preferably one) functional group reactive with a C-OH group, is reacted.

The group reactive with a C-OH group may, for example, be an isocyanate group or an epoxy group. Among them, an isocyanate group is preferably used as the group reactive with a C-OH group, since the reaction control is thereby easy.

As a compound having a hydrolyzable silyl group and an isocyanate group (hereinafter sometimes referred to as a silyl group-containing isocyanate), 3-isocyanate propyltriethoxysilane or 3-isocyanate trimethoxysilane may, for example, be used.

By the reaction with such a silyl group-containing isocyanate, some of C-OH group-containing polymerized units in the first acrylic polymer will be converted to silyl group-containing polymerized units. That is, in some of C-OH group-containing polymerized units, the isocyanate group of the silyl group-containing isocyanate is reacted to the C-OH group in a side chain (urethane-forming reaction), whereby a hydrolyzable silyl group is introduced to the side chain. By suitably adjusting the molar ratio of the C-OH group-containing polymerized units contained in the first acrylic polymer to the isocyanate group of the silyl group-containing isocyanate, it is possible to convert some of the C-OH group-containing polymerized units in the first acrylic polymer to polymerized units having a hydrolyzable silyl group introduced to a side chain via a urethane bond and to let the rest of polymerized units remain to be C-OH group-containing polymerized units without change.

By thus modifying some of the C-OH group-containing polymerized units in the first acrylic polymer to silyl group-containing polymerized units, a silyl group-containing acrylic polymer (α) is obtainable. Among the C-OH group-containing polymerized units in the first acrylic polymer, the proportion (hereinafter referred to as the modification ratio) of polymerized units modified to silyl group-containing polymerized units by the reaction with the silyl group-containing isocyanate may be made to be from 5 to 75 mol%. In a case where a C-OH group-containing polymerized unit contains one C-OH group, the above modification ratio may be regarded as the proportion of groups reacted with isocyanate groups, among the C-OH groups in the first acrylic polymer.

As mentioned above, the C-OH group-containing polymerized units (α2) contained in the silyl group-containing acrylic polymer (α) are preferably from 0.5 to 30 mol% in all polymerized units constituting the silyl group-containing acrylic polymer (α).

If the C-OH group-containing polymerized units contained in the silyl group-containing acrylic polymer (α) are less than 0.5 mol%, formation of the modified product (X) by the reaction with the compound (β) having crosslinkable groups may not sufficiently proceed, and a crosslinked product tends to be hardly formed in the primer layer.

A specific example of the preparation of a silyl group-containing acrylic polymer (α) by Method 2 is shown by the following reaction formula (2).

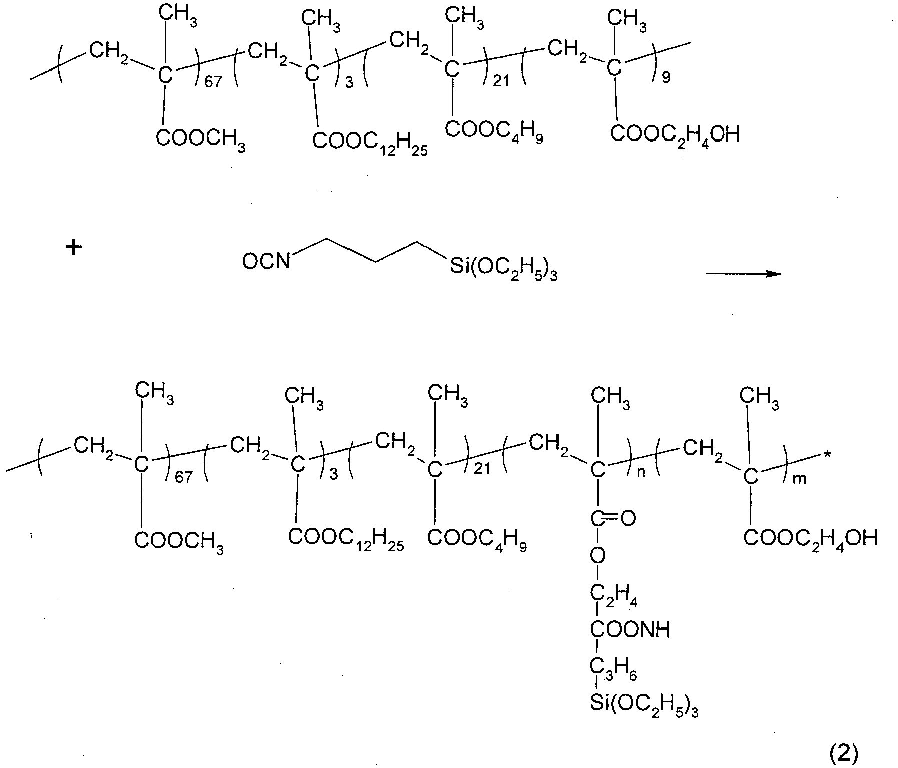

In this reaction formula (2), 3-isocyanate propyltriethoxysilane as an isocyanate having a hydrolyzable silyl group, is reacted to a first acrylic polymer obtained by copolymerizing methyl methacrylate (MMA), lauryl methacrylate (LMA), n-butyl methacrylate (BMA) and 2-hydroxyethyl methacrylate (HEMA) in a molar ratio of 67:3:21:9, whereby some of the C-OH group-containing polymerized units are modified to polymerized units having a hydrolyzable silyl group (a triethoxysilyl group) introduced thereto.

Here, among the C-OH group-containing polymerized units in the first acrylic polymer, the sum of the molar ratio n of polymerized units having a hydrolyzable silyl group (a triethoxysilyl group) introduced as modified by the reaction of a C-OH group and an isocyanate group, and the molar ratio m of polymerized units remaining as C-OH group-containing polymerized units without change, is 9 (n+m=9) i.e. the molar ratio of the C-OH group-containing polymerized units in the first acrylic polymer. And, n/(n+m=9) is the above-mentioned modification ratio of the C-OH group-containing polymerized units.

The silyl group-containing acrylic polymer (α) is preferably one having a mass average molecular weight Mw of from 5,000 to 300,000. If the mass average molecular weight of the silyl group-containing acrylic polymer (α) exceeds 300,000, the viscosity of the polymer becomes high, and coating with a primer layer-forming composition (as described later) containing it becomes difficult, whereby there may be a case where a proper film thickness may not be obtained. On the other hand, if the mass average molecular weight of the silyl group-containing acrylic polymer (α) is less than 5,000, entanglement with the acrylic polymer (P) in the primer layer tends to be weak, and the strength of the primer layer tends to decrease, whereby the weather resistance is likely to decrease.

Further, such a silyl group-containing acrylic polymer (α) preferably does not contain polymerized units having an aromatic hydrocarbon group in a side chain. That is, it is preferred that the silyl group-containing acrylic polymer (α) does not have a structure wherein a monomer having an aromatic hydrocarbon group such as an ultraviolet absorbing group, is copolymerized. In a case where a silyl group-containing acrylic polymer (α) contained in the primer layer has a structure wherein a monomer having an aromatic hydrocarbon group such as an organic ultraviolet absorbing group is copolymerized, the reactivity tends to be inadequate between the hydrolyzable silyl group bonded to a side chain of the silyl group-containing acrylic polymer (α) and the organopolysiloxane constituting the hard coating layer, and improvement in adhesion, particularly weather resistant adhesion, may not be expected. Further, the affinity to the acrylic polymer (P) as the main component of the primer layer tends to be inadequate, and an improvement in the abrasion resistance of the hard coating film may not sufficiently be obtained.

The compound (β) having at least two crosslinkable functional groups reactive with hydroxy groups is one to form a modified product (X) by being reacted with the silyl group-containing acrylic polymer (α).

That is, the crosslinkable functional groups contained in the compound (β) will not only bond to hydroxy groups contained in the silyl group-containing acrylic polymer (α) to form a modified product (X), but also react to hydroxy groups bonded to side chains in the silyl group-containing acrylic polymer (α) contained in another modified product (X), whereby they are capable of forming a crosslinked structure of modified products (X) one another.

Since such a crosslinked structure is formed, the silyl group-containing acrylic polymer (α) may be uniformly present in the primer layer 3. Particularly, the hydrolyzable silyl group present at the interface S between the primer layer 3 and the hard coating layer 4 will be fixed by the crosslinked structure, whereby a reaction between hydrolyzable silyl groups contained in the primer layer 3 and the curable terminal groups Si-OX of the organopolysiloxane (T units) contained in the hard coating layer 4 takes place at the interface S to form siloxane bonds (-O-Si-O-). Accordingly, the adhesion, particularly the weather resistance adhesion, between the primer layer 3 and the hard coating layer 4 will be increased.

The crosslinkable functional groups reactive with hydroxy groups may, for example, be isocyanate groups, carbodiimide groups or epoxy groups.

The compound (β) is not particularly limited so long as it is capable of forming a crosslinked product of modified products (X) one another by crosslinkable functional groups reactive with hydroxy groups, and for example, the following blocked isocyanate can be preferably used.

A blocked isocyanate is an isocyanate precursor to form an isocyanate by e.g. heat treatment. By using such a blocked isocyanate, the storage stability of the primer layer-forming composition will be improved as compared with a case where a polyisocyanate is employed. Further, at the time of preparing a primer layer-forming composition, it is possible to use an alcohol type solvent, such being preferred from the viewpoint of efficiency in the preparation of the primer layer-forming composition, as compared with a polyisocyanate whereby an alcohol type solvent cannot be used.

The blocked isocyanate is a compound obtainable by reacting a blocking agent to a polyisocyanate having at least two isocyanate groups per molecule.

The isocyanate may, for example, be 1,6-hexane diisocyanate, 4,4'-diphenylmethane diisocyanate, 2,4-tolylene diisocyanate, 2,6-tolylene diisocyanate, xylylene diisocyanate, 4,4'-dicyclohexylmethane diisocyanate, 4,4'-hydroxylated diisocyanate, isophorone diisocyanate, 1,5-naphthalene diisocyanate, 4,4-diphenyl diisocyanate, 1,3-bis(isocyanatemethyl)cyclohexane, phenylene 1,4- diisocyanate, phenylene 2,6- diisocyanate, 1,3,6-hexamethylene triisocyanate or hexamethylene diisocyanate.

Further, an adduct of such a polyisocyanate compound with a polyhydric alcohol or a low molecular weight polyester resin, a cyclopolymerization product of the above polyisocyanate compounds to one another, or an isocyanate/biuret product may also be mentioned. Among them, an aliphatic polyisocyanate compound such as hexamethylene diisocyanate or isophorone diisocyanate, an adduct of an aliphatic polyisocyanate compound and a polyhydric alcohol, or a cyclization polymerization product of aliphatic polyisocyanate compounds to one another, may, for example, be preferred, since it is excellent in weather resistance.

As the blocking agent to be reacted to an isocyanate group of the above polyisocyanate compound, an oxime such as acetoxime or methyl ethyl ketoxime, an active methylene compound such as dimethyl malonate, methyl acetoacetate, ethyl acetoacetate or acetylacetone, an alcohol, a phenol, ε-caprolactam, a mercaptan, an amine, an imide, an acid amide, an imidazole, a urea, a carbamate, an imine or a sulfite, may, for example, be used.

The blocked isocyanate compounds may specifically be commercial products such as DURANATE 17B-60PX, TPA-B80E, TPA-B80X, MF-B60X, E402-B80T, ME20-B80S, MF-K60X, K6000 (tradenames, hexamethylene diisocyanate (hereinafter referred to also as HDI) type block isocyanates manufactured by Asahi Kasei Corporation), or Takenate B-882N (tradename, HDI type block isocyanate manufactured by Mitsui Chemicals, Inc.), Takenate B-830 (tradename, tolylene diisocyanate type blocked isocyanate manufactured by Mitsui Chemicals, Inc.), Takenate B-815N (tradename, 4,4'-diphenylmethane diisocyanate type blocked isocyanate manufactured by Mitsui Chemicals, Inc.), Takenate B-846N (tradename, 1,3-bis(isocyanatemethyl)cyclohexane type blocked isocyanate manufactured by Mitsui Chemicals, Inc.), Coronate AP-M, 2503, 2515, 2507, 2513 or MILLIONATE MS-50 (tradename, 1,3-bis(isocyanatemethyl)cyclohexane type blocked isocyanate manufactured by Nippon Polyurethane Industry Co., Ltd.), and they may be used alone, or two or more of them may be used in combination. Among them, a blocked isocyanate using an aliphatic polyisocyanate such as hexamethylene diisocyanate, is preferred from the viewpoint of the weather resistance.

The temperature for curing the primer layer-forming composition depends on the temperature for detachment of the blocking agent, but the temperature for detachment of the blocking agent can be optionally adjusted by the structure of the polyisocyanate and the structure of the blocking agent. With a view to preventing a deformation of the resin substrate at the time of thermal curing, it is preferred to employ a blocked isocyanate whereby the temperature for curing the primer layer-forming composition will be at most 200°C.

The compound (β) having at least two crosslinkable functional groups reactive with hydroxyalkyl groups (hereinafter sometimes referred to simply as the compound (β) is preferably blended in such a proportion that isocyanate groups to be formed from the blocked isocyanate will be from 0.5 to 2 equivalents to hydroxy groups contained in the silyl group-containing acrylic polymer (α).

If the blend amount of the compound (β) is less than 0.5 equivalent to the hydroxyalkyl groups contained in the silyl group-containing acrylic polymer (α), the modified product (X) may not sufficiently be formed. On the other hand, if the blend amount of the compound (β) exceeds 2 equivalents to the hydroxyalkyl groups contained in the silyl group-containing acrylic polymer (α), it is likely that unreacted isocyanate groups, etc. will remain in the modified product (X), and as the time passes, they may react with moisture, etc., whereby the crosslinked density will increase, and the primer layer will become excessively hard.

In the primer layer, an ultraviolet absorber is preferably contained in order to prevent yellowing of the resin substrate. As such an ultraviolet absorber, the same one as an ultraviolet absorber to be contained in the after-described hard coating layer-forming composition may be used. One of such ultraviolet absorbers may be used alone, or two or more of them may be used in combination. The content of the ultraviolet absorber in the primer layer is preferably from 1 to 50 parts by mass, particularly preferably from 1 to 30 parts by mass, per 100 parts by mass of the resin component such as the acrylic polymer (P).

The primer layer may further contains a photostabilizer, a catalyst for curing hydroxyalkyl groups and isocyanate groups, etc. The photostabilizer may, for example, be a hindered amine; or a nickel complex such as nickel bis(octylphenyl) sulfide, nickel complex-3,5-di-tert-butyl-4-hydroxybenzyl phosphoric acid monoethylate or nickel dibutyl dithiocarbamate. Two or more of them may be used in combination. The content of the photostabilizer in the primer layer is preferably from 0.01 to 50 parts by mass, particularly preferably from 0.1 to 10 parts by mass, per 100 parts by mass of the resin component such as the acrylic polymer (P).

The curing catalyst may, for example, be an organic tin compound such as di-n-butyltin dilaurate, di-n-butyltin acetate, di-n-butyltin dioctanoate, di-n-butyltin bis(2-ethylhexyl maleate), dimethylhydroxytin oleate, dimethyltin dineodecanoate, di-n-octyltin dilaurate, di-n-octyltin dimaleate or n-butyltin tris(2-ethylhexanoate), or a tertiary amine such as dimethylethanolamine or triethylenediamine. They may be used alone or two or more of the may be used in combination.

The content of the curing catalyst is preferably from 0.001 to 3.0 parts by mass, more preferably from 0.002 to 2.0 parts by mass, per 100 parts by mass of the resin component in the primer layer.

If the content of the curing catalyst is less than 0.001 part by mass per 100 parts by mass of the resin component in the primer layer, the effect to promote the crosslinking reaction may not sufficiently be obtainable, and if it exceeds 3.0 parts by mass, it is likely that curing of the primer layer proceeds excessively, whereby the adhesion to the hard coating layer tends to decrease.

In the resin substrate provided with a hard coating film of the present invention, the method for forming a primer layer on at least one surface of the above-described resin substrate, is not particularly limited, but preferably, a method is employed wherein a primer layer-forming composition comprising the above-mentioned acrylic polymer (P), silyl group-containing acrylic polymer (α), compound (β), ultraviolet absorber and solvent, is applied and dried on a resin substrate.

In the primer layer-forming composition to be used for forming a primer layer, a solvent is usually contained. The solvent is not particularly limited so long as it is a solvent capable of stably dissolving the acrylic polymer (P). Specifically, it may, for example, be a ketone such as acetone, methyl ethyl ketone, methyl isobutyl ketone or cyclohexanone; an ether such as tetrahydrofuran, 1,4-dioxane or 1,2-dimethoxyethane; an ester such as ethyl acetate, butyl acetate or methoxyethyl acetate; an alcohol such as methanol, ethanol, 1-propanol, 2-propanol, 1-butanol, 2-butanol, 2-methyl-1-propanol, 2-methoxyethanol, acetone alcohol, 2-butoxyethanol, 1-methoxy-2-propanol or diacetone alcohol; a hydrocarbon such as n-hexane, n-heptane, isooctane, benzene, toluene, xylene, gasoline, light oil or kerosene; acetonitrile, nitromethane or water. They may be used in a combination of two or more of them.

The amount of the solvent is preferably from 50 to 10,000 parts by mass, particularly preferably from 100 to 10,000 parts by mass, per 100 parts by mass of the resin component such as the acrylic polymer (P). Further, the content of the non-volatile component (solid content) in the primer layer-forming composition is preferably from 0.5 to 75 mass%, particularly preferably from 1 to 60 mass%, based on the entire composition.

The above primer layer-forming composition may further contain additives such as a leveling agent, a defoaming agent, a viscosity-adjusting agent, etc.

The method for applying the primer layer-forming composition on the resin substrate is not particularly limited, and a spray coating method, a flow coating method, a die coating method or a spin coating method may, for example, be mentioned. Further, the heating conditions for drying are not particularly limited, but are preferably from 50 to 140°C for from 5 minutes to 3 hours.

With respect to a primer layer to be formed on a resin substrate by using the above-described primer layer-forming composition, if the thickness of the primer layer is too thin, yellowing by deterioration of the weather resistance of the resin substrate itself cannot be prevented, and yellowing resistance, weather cracking resistance and weather resistant adhesion of the resin substrate provided with a hard coating film deteriorate, whereby the weather resistance of the resin substrate provided with a hard coating film deteriorates. The thickness of the primer layer is preferably at least 0.1 µm and at most 7 µm, particularly preferably at least 2 µm and at most 7 µm. Here, the thickness means the thickness at the time when a primer layer is formed alone on a substrate such as a resin substrate.

### [Hard coating layer]

### (Organopolysiloxane)

The hard coating layer to be used for the resin substrate provided with a hard coating film of the present invention contains a cured product of an organopolysiloxane as the main component, and as the polyorganosiloxane to form such a cured product, any polyorganosiloxane may be used without any particularly restriction so long as it is a curable polyorganosiloxane.

Organopolysiloxanes are composed of silicon-containing bond units so-called M units, D units, T units or Q units. Among them, a curable organopolysiloxane is an oligomer-form polymer composed mainly of T units or Q units, and it may be a polymer composed solely of T units, a polymer composed solely of Q units, or a polymer composed of T units and Q units. Further, such polymers may contain a small amount of M units or D units.

In a curable organopolysiloxane, a T unit is a unit having one silicon atom, one hydrogen atom or monovalent organic group bonded to the silicon atom, and three oxygen atoms bonded to other silicon atoms (or functional groups which can be bonded to other silicon atoms). The monovalent organic group bonded to the silicon atom is a monovalent organic group wherein the atom bonded to the silicon atom is a carbon atom. The functional groups which can be bonded to other silicon atoms are hydroxy groups or groups which can be converted to hydroxy groups by hydrolysis (hereinafter referred to as hydrolyzable groups). The sum of the oxygen atoms bonded to other silicon atoms and the functional groups which can be bonded to other silicon atoms, is 3, and T units are classified into three types of units so-called T1, T2 and T3, depending upon the difference in number of the oxygen atoms bonded to other silicone atoms and the functional groups which can be bonded to other silicon atoms. In T1, the number of oxygen atoms bonded to other silicon atoms is 1, in T2, the number of such oxygen atoms is 2, and in T3, the number of such oxygen atoms is 3. In this specification, etc., an oxygen atom bonded to another silicon atoms is represented by O*, and a monovalent functional group which can be bonded to another silicon atom is represented by Z.

Here, O* representing an oxygen atom bonded to another silicon atom, is an oxygen atom linking two silicon atoms and is an oxygen atom in a bond represented by Si-O-Si. Accordingly, O* is one present between silicon atoms of two silicon-containing bond units. In other words, O* represents an oxygen atom shared between two silicon atoms of two silicon-containing bond units. In the after-mentioned chemical formulae of the fluorine-containing bond units, O* is represented as bonded to one silicon atom, but this O* is an oxygen atom shared by a silicon atom of another silicon-containing bond unit and does not mean that two silicon-containing bond units are bonded by a bond represented by Si-O*-O*-Si.

The above-mentioned M unit is a unit having three such organic groups and one O*; the D unit is a unit having two such organic groups and two O* (or one O* and one Z group); and the Q unit is a unit having no such an organic group and 4 O* (or a total of 4 i.e. from 1 to 3 O* and from 3 to 1 Z group). Each silicon-containing bond unit is formed from a compound having no oxygen atom (O*) bonded to another silicon atom (having only Z groups) (hereinafter sometimes referred to as a monomer). A monomer to form a T unit will be referred to as a T monomer. A monomer to form a M unit, a D unit or a Q unit may likewise be referred to as a M monomer, a D monomer or a Q monomer.

The monomer is represented by (R'-)ₐSi(-Z)₄₋ₐ, wherein a is an integer of from 0 to 3, R' is a hydrogen atom or a monovalent organic group, and Z is a hydroxy group or a monovalent functional group which can be bonded to another silicon atom. In this chemical formula, a compound wherein a=3 is the M monomer; a compound wherein a=2 is the D monomer; and a compound wherein a=1 is the T monomer; and a compound wherein a=0, is the Q monomer. In such monomers, the Z group is usually a hydrolyzable group. Further, in a case where 2 or 3 R' are present (in a case where a is 2 or 3), a plurality of R' may be different. R' is preferably one within the same scope as the after-mentioned preferred R.

A curable organopolysiloxane can be obtained by a reaction to convert some of Z groups in a monomer to O*. In a case where the organopolysiloxane is a copolymer comprising two or more silicon-containing bond units, such a copolymer is usually obtainable from a mixture of the respectively corresponding monomers. In a case where Z groups in a monomer are hydrolyzable groups, the Z groups are converted to hydroxy groups by a hydrolysis reaction, and then, by a dehydration condensation reaction between two hydroxy groups bonded to separate silicon atoms, the two silicon atoms will be linked via an oxygen atom (O*). In the curable organopolysiloxane, hydroxy groups (or non-hydrolyzed Z groups) remain, and at the time of curing of such a curable organopolysiloxane, such hydroxy groups or Z groups are reacted in the same manner as described above, for curing. The cured product of the curable organopolysiloxane is a three dimensionally crosslinked polymer, and a cured product of a curable organopolysiloxane having many T units or Q units will be a cured product having a high crosslink density. At the time of curing, Z groups of a curable organopolysiloxane are converted to O*, but it is considered that some of Z groups (particularly hydroxy groups) will remain, so that the cured product will have hydroxy groups. In a case where a curable organopolysiloxane is cured at a high temperature, there may be a case where no substantial hydroxy groups will remain in the cured product.

In a case where Z groups in a monomer are hydrolyzable groups, such Z groups may, for example, be alkoxy groups, chlorine atoms, acyloxy groups or isocyanate groups. In many cases, as a monomer, a monomer wherein Z groups are alkoxy groups, is used. Alkoxy groups are hydrolyzable groups having a relatively low reactivity as compared with e.g. chlorine atoms, and in a curable organopolysiloxane obtainable by using a monomer wherein Z groups are alkoxy groups, unreacted alkoxy groups are present together with hydroxy groups, as Z groups, in many cases. In a case where Z groups in a monomer are hydrolyzable groups having a relatively high reactivity (such as chlorine atoms), most of Z groups in a curable organopolysiloxane obtainable by using such a monomer will be hydroxy groups. Therefore, in a usual curable organopolysiloxane, Z groups in the respective units constituting it are hydroxy groups, or hydroxy groups and alkoxy groups, in many cases.

In the present invention, among such curable organopolysiloxanes, a curable organopolysiloxane having T units as the main silicon-containing bond units, is preferably used. Hereinafter, a curable organopolysiloxane will be referred to simply as an organopolysiloxane, unless otherwise specified. Here, in this specification, an organopolysiloxane having T units as the main constituting units (hereinafter referred to as "organopolysiloxane (T)" as the case requires) is meant for an organopolysiloxane wherein the proportion of the number of T units is from 50 to 100% to the total number of M units, D units, T units and Q units. In the present invention, it is more preferred to use an organopolysiloxane wherein the proportion of the number of T units is from 70 to 100%, and it is particularly preferred to use an organopolysiloxane wherein the proportion of the number of T units is from 90 to 100%. Further, as other units contained in a small amount other than T units, preferred are D units and Q units, and particularly preferred are Q units.

That is, in the present invention, among such curable organopolysiloxanes, an organopolysiloxane composed solely of T units and Q units, wherein their ratio in number is T:Q=from 90 to 100:from 10 to 0, is particularly preferably used.

The proportions in number of M units, D units, T units and Q units can be calculated from values of peak area ratios by ²⁹Si-NMR.

The organopolysiloxane (T) to be preferably used in the present invention, is an organopolysiloxane having T units represented by the following T1 to T3.
T1: R-Si(-OX)₂(-O*-)
T2: R-Si(-OX)(-O*-)₂
T3: R-Si(-O*-)₃
(wherein R is a hydrogen atom or a C₁₋₁₀ substituted or unsubstituted monovalent organic group, X is a hydrogen atom or a C₁₋₆ alkyl group, and O* is an oxygen atom linking two silicon atoms.)

In the above chemical formulae, R is not limited to one type, and each of T1, T2 and T3 may contain plural types of R. Further, in the above chemical formulae, -OX is a hydroxy group or an alkoxy group. Between T1 and T2, -OX may be the same or different. Two -OX in T1 may be different, and for example, one of them may be a hydroxy group and the other may be an alkoxy group. Further, when the two -OX are alkoxy groups, such alkoxy groups may be different alkoxy groups. However, as described hereinafter, the two alkoxy groups are usually the same alkoxy groups.

Further, a T unit having three -OX only without having an oxygen atom (O*) linking two silicon atoms, will be hereinafter referred to as T0. Actually, T0 corresponds to a non-reacted T monomer contained in the organopolysiloxane and is not a silicon-containing bond unit. Such a T0 is measured in the same manner as T1 to T3 in the analysis of T1 to T3 units.

T0 to T3 in the organopolysiloxane can be analyzed by measuring the bonding states of silicon atoms in the organopolysiloxane by a nuclear magnetic resonance analysis (²⁹Si-NMR). The ratios in number of T0 to T3 are obtained from the peak area ratios in ²⁹Si-NMR. -OX in the organopolysiloxane molecule can be analyzed by an infrared absorption analysis. The ratios in number of hydroxy groups and alkoxy groups bonded to silicon atoms can be obtained from the peak area ratios of the infrared absorption peaks of the two. The mass average molecular weight Mw, the number average molecular weight Mn and the dispersion degree Mw/Mn of the organopolysiloxane are values measured by using polystyrene as a standard substance by a gel permeation chromatography method. Such properties of an organopolysiloxane are not meant for the properties of a single molecule, but are obtained as average properties of the respective molecules.

A plurality of T1, T2 or T3 present in one molecule of the organopolysiloxane (T) may be two or more different types. For example, there may be two or more T2 different in R. Such an organopolysiloxane is obtainable from a mixture of two or more T monomers. For example, it is considered that in an organopolysiloxane obtainable from a mixture of two or more T monomers different in R, two or more T1, T2 and T3, respectively, different in R are present. The ratio in number of different R in an organopolysiloxane obtained from a mixture of a plurality of T monomers different in R, reflects the compositional ratio in the mixture of the T monomers different in R. However, the ratio in number of units different in R in each of T1, T2 and T3 does not necessarily reflect the compositional ratio in the mixture of the T monomers different in R, because, for example, even if three -OX in the T monomers are the same, the reactivities of the T monomers, T1 and T2 may be different due to the difference in R.

The organopolysiloxanes (T) is preferably produced from at least one type of T monomers represented by R-Si(-OY)₃. In this formula, R is the same as the above-described R, and Y is a C₁₋₆ alkyl group. Y may be not only an unsubstituted alkyl group but also a substituted alkyl group such as an alkoxy-substituted alkyl group. Three Y in one molecule may be different. However, the three Y are usually the same alkyl group. Y is preferably an alkyl group having from 1 to 4 carbon atoms, more preferably 1 or 2 carbon atoms. Specifically, Y may, for example, be a methyl group, an ethyl group, a n-propyl group, a n-butyl group, a t-butyl group or a 2-methoxyethyl group.

R is a hydrogen atom or a C₁₋₁₀ substituted or unsubstituted monovalent organic group. The organic group is meant for an organic group wherein, as mentioned above, atoms bonded to silicon atoms are carbon atoms.

The unsubstituted monovalent organic group may be a hydrocarbon group such as an alkyl group, an alkenyl group, an alkynyl group, an cycloalkyl group, an aryl group or an aralkyl group. Such a hydrocarbon group is preferably a C₁₋₁₀ alkyl group, a C₂₋₁₀ alkenyl or alkynyl group, a C₅ or C₆ cycloalkyl group, a C₆₋₁₀ aryl group or a C₇₋₁₀ aralkyl group. Specifically, a methyl group, an ethyl group, a n-propyl group, a n-butyl group, an i-butyl group, a t-butyl group, a hexyl group, an octyl group, a decyl group, a vinyl group, an allyl group, a cyclohexyl group, a phenyl group, a benzyl group or a phenethyl group, may, for example, be mentioned.

The substituted monovalent organic group may, for example, be a hydrocarbon group having a hydrogen atom of a ring of e.g. a cycloalkyl group, an aryl group or an aralkyl group substituted by an alkyl group, or a substituted organic group having a hydrogen atom of the above mentioned hydrocarbon group substituted by e.g. a halogen atom, a functional group or a functional group-containing organic group. As the functional group, a hydroxy group, a mercapto group, a carboxy group, an epoxy group, an amino group or an cyano group may, for example, be preferred. As a halogen atom-substituted organic group, an alkyl group having a chlorine atom or a fluorine atom, such as a chloroalkyl group or a polyfluoroalkyl group, is preferred. As the functional group-containing organic group, an alkoxy group, an acyl group, an acyloxy group, an alkoxycarbonyl group, a glycidyl group, an epoxycyclohexyl group, an alkylamino group, a dialkylamino group, an arylamino group or an N-aminoalkylsubstituted aminoalkyl group is, for example, preferred. Particularly preferred is a chlorine atom, a mercapto group, an epoxy group, an amino group, an acryloyloxy group, a methacryloyloxy group, a glycidyl group, an alkylamino group or an N-aminoalkyl-substituted aminoalkyl group. A T monomer having a substituted organic group which is substituted by e.g. a functional group or a functional group-containing organic group, includes a compound in a category so-called a silane coupling agent.

As specific examples of the substituted organic group, the following organic groups may be mentioned: a 3-chloropropyl group, a 3,3,3-trifluoropropyl group, a 3-mercaptopropyl group, a p-mercaptomethylphenylethyl group, a 3-acryloyloxypropyl group, a 3-methacryloyloxypropyl group, a 3-glycidoxypropyl group, a 2-(3,4-epoxycyclohexyl)ethyl group, a 3-aminopropyl group, an N-phenyl-3-aminopropyl group, an N-(2-aminoethyl)-3-aminopropyl group, and a 2-cyanoethyl group.

As the above R, a particularly preferred monovalent organic group is a C₁₋₄ alkyl group. The organopolysiloxane (T) is preferably an organopolysiloxane which is obtainable by using one or more of T monomers each having a C₁₋₄ alkyl group. Further, the organopolysiloxane (T) is also preferably an organopolysiloxane which is obtainable by using at least one of T monomers each having a C₁₋₄ alkyl group and a small amount of another T monomer. The proportion of such another T monomer is preferably at most 30 mol%, particularly preferably at most 15 mol%, based on the total amount of T monomers. As such another T monomer, preferred is a T monomer having a substituted organic group which is substituted by a functional group or a functional group-containing organic group, in a category so-called a silane coupling agent.

Specifically, a T monomer having a C₁₋₄ alkyl group may, for example, be methyltrimethoxysilane, methyltriethoxysilane, methyltripropoxysilane, ethyltrimethoxysilane or ethyltriethoxysilane. Particularly preferred is methyltrimethoxysilane or ethyltrimethoxysilane. As specific examples of a T monomer having a substituted organic group or the like, the following compounds may, for example, be mentioned.

Vinyltrimethoxysilane, vinyltriethoxysilane, phenyltrimethoxysilane, phenyltriethoxysilane, 3-chloropropyltrimethoxysilane, 3,3,3-trifluoropropyltrimethoxysilane, 3-mercaptopropyltrimethoxysilane, 3-glycidoxypropyltrimethoxysilane, 3-glycidoxypropyltriethoxysilane, 2-(3,4-epoxycyclohexyl)ethyltrimethoxysilane, 2-(3,4-epoxycyclohexyl)ethyltriethoxysilane, 3-acryloyloxypropyltrimethoxysilane, 3-methacryloyloxypropyltrimethoxysilane, 3-aminopropyltrimethoxysilane, 3-aminopropyltriethoxysilane, N-(2-aminoethyl)-3-aminopropyltrimethoxysilane and 3-cyanoethyltrimethoxysilane.

A T monomer represented by (R'-)ₐSi(-Z)₄₋ₐ (a=3) other than the T monomer represented by R-Si(-OY)₃, may, for example, be methyltrichlorosilane, ethyltrichlorosilane, phenyltrichlorosilane, 3-glycidoxypropyltrichlorosilane, methyltriacetoxysilane or ethyltriacetoxysilane.

In a D monomer represented by (R'-)ₐSi(-Z)₄₋ₐ (a=2), the two R' may be the same or different. In a case where they are the same, they are preferably a C₁₋₄ alkyl group. In a case where they are different, it is preferred that one R' is a C₁₋₄ alkyl group, and the other R' is a substituted organic group which is substituted by the above mentioned functional group or functional group-organic group. Further, the Z group is preferably a C₁₋₄ alkoxy group, an acetoxy group or the like. As the D monomer, the following compounds may, for example, be mentioned.

Dimethyldimethoxysilane, dimethyldiethoxysilane, vinylmethyldiethoxysilane, vinylmethyldiethoxysilane, phenylmethyldimethoxysilane, phenylmethyldiacetoxysilane, 3-chloropropylmethyldimethoxysilane, 3,3,3-trifluoropropylmethyldimethoxysilane, 3-mercaptopropylmethyldiethoxysilane, 3-acryloyloxypropylmethyldimethoxysilane, 3-methacryloyloxypropylmethyldimethoxysilane, 3-aminopropylmethyldimethoxysilane, 3-aminopropylmethyldiethoxysilane, N-(2-aminoethyl)-3-aminopropylmethyldimethoxysilane and 3-cyanoethylmethyldimethoxysilane.

In a Q monomer represented by (R'-)ₐSi(-Z)₄₋ₐ (a=0), the four Z groups may be different, but they are usually the same. The Z group is preferably a C₁₋₄ alkoxy group, particularly preferably a methoxy group or an ethoxy group. As the Q monomer, the following compounds may, for example, be mentioned.

Tetramethoxysilane, tetraethoxysilane, tetra n-propoxysilane, tetra n-butoxysilane, tetra sec-butoxysilane and tetra t-butoxysilane.

The organopolysiloxane (T) to be used in the present invention can be obtained by subjecting the above T monomer or the like to partial hydrolytic condensation. Usually, this reaction is carried out by heating the T monomer or the like and water in a solvent. It is preferred that a catalyst is present in the reaction system. The desired organopolysiloxane can be produced by adjusting the reaction conditions such as the type of the monomer, the amount of water, the heating temperature, the type and amount of the catalyst, the reaction time, etc. In some cases, a commercially available organopolysiloxane may be used as it is, as the desired organopolysiloxane, or the desired organopolysiloxane may be produced by using a commercially available organopolysiloxane.

The above catalyst is preferably an acid catalyst. The acid catalyst may, for example, be an inorganic acid such as hydrochloric acid, sulfuric acid, nitric acid, phosphoric acid, nitrous acid, perchloric acid or sulfamic acid, or an organic acid such as formic acid, acetic acid, propionic acid, butyric acid, oxalic acid, succinic acid, maleic acid, lactic acid or p-toluenesulfonic acid. Particularly preferred is acetic acid. The above solvent is preferably a hydrophilic organic solvent, particularly preferably an alcohol type solvent. The alcohol type solvent may, for example, be methanol, ethanol, 1-propanol, 2-propanol, 1-butanol, 2-butanol, 2-methyl-1-propanol, 2-ethoxyethanol, diacetone alcohol or 2-buthoxyethanol. With respect to the reaction temperature, in a case where a catalyst is present, the reaction can be made at ordinary temperature. Usually, within a reaction temperature of from 20 to 80°C, a suitable temperature is selected for use depending upon the particular purpose.

The hydrolytic condensation reaction is a reaction whereby T1 is formed from T0 (T monomer), T2 is formed from T1, and T3 is formed from T2. The reaction rate is considered to be low in the order of the condensation reaction whereby T1 is formed from T0 having at least one hydrolyzable group converted to a hydroxy group, a condensation reaction whereby T2 is formed from T1 wherein at least one of the two -OX is hydroxy group, and a condensation reaction whereby T3 is formed from T2 wherein -OX is a hydroxy group. Also in consideration of a hydrolytic reaction of a hydrolyzable group, it is considered that the peak of the amount of each unit to be present moves from T0 to T3 as the reaction proceeds. In a case where the reaction conditions are relatively mild, it is considered that the movement of the peak of the amount present proceeds relatively steadily. Among organopolysiloxanes (T) to be used in the present invention, the organopolysiloxane (a) is an organopolysiloxane having a relatively high molecular weight wherein the amount of T0 or T1 present is small, and the ratio in the amount present of T2 to T3 is in a specific range, and such an organopolysiloxane can be produced by selecting relatively mild reaction conditions.

The reactivity for the above condensation reaction changes depending on R, and if R differs, the reactivity of a hydroxy group also changes. Usually, as R becomes small (for example, in a case where R is an alkyl group, as the number of carbon atoms in the alkyl group becomes small), the reactivity of a hydroxy group becomes high. Accordingly, it is preferred to select the T monomer taking into consideration the relation between the reactivity of the hydrolyzable group and the reactivity of the hydroxy group.

Further, the rate of the hydrolysis reaction of a hydrolyzable group to a hydroxy group changes depending upon the type of the hydrolyzable group, and it is preferred to take into consideration the relation with the rate of the condensation reaction. For example, in a case where an OX group in T2 is an alkoxy group, if its hydrolysis reaction rate is too slow, T2 wherein the OX group is a hydroxy group becomes less. Likewise, if the hydrolysis reaction rate is too slow, T1 wherein the OX group is a hydroxy group becomes less. Therefore, it becomes difficult to obtain an organopolysiloxane wherein the ratio in amount of the hydroxy group to the alkoxy group is high. Accordingly, the alkoxy group being an OX group is preferably an alkoxy group having a high reactivity i.e. an alkoxy group having a small number of carbon atoms, and a methoxy group is most preferred. In a case where the reactivity of a hydrolyzable group is sufficiently high, it is possible to obtain an organopolysiloxane having a high proportion of hydroxy groups from an organopolysiloxane having a high proportion of hydrolyzable groups without proceeding with the condensation reaction so much.

In the hard coating layer-forming composition to be used in the present invention, it is possible to incorporate one of curable organopolysiloxanes (T) thus obtained alone, or to incorporate two or more of them in combination.

Further, in the resin substrate provided with a hard coating film of the present invention, in order to form a hard coating layer, a composition containing materials before curing of components to constitute the hard coating layer, to be commonly used (hereinafter referred to as a "hard coating layer-forming composition") is prepared and used. Also a curable organopolysiloxane (T) to be preferably used in the present invention is incorporated to such a hard coating layer-forming composition in the production process and thus can be contained as its cured product in the obtainable hard coating layer.

A combination of an organopolysiloxane (a) and an organopolysiloxane (b) will be described hereinafter as a particularly preferred combination of organopolysiloxanes (T) from the viewpoint of the abrasion resistance, but it should be understood that the curable organopolysiloxanes to be used in the present invention are by no means limited to them. Further, the organopolysiloxane (a) and the organopolysiloxane (b) are not thereby prevented from being used independently as organopolysiloxanes (T) in the present invention.

### (Organopolysiloxane (a))

An organopolysiloxane (a) contains the respective units T1 to T3 in a ratio of T1:T2:T3=0-5:15-40:55-85 and in a ratio of T3/T2=1.5-4.0. Further, with respect to OX groups in the organopolysiloxane (a), the ratio of the number (B) of them being hydroxy groups to the number (A) of them being alkoxy groups i.e. (B)/(A) is at least 12.0 on molecular average. And, the mass average molecular weight of the organopolysiloxane (a) is from 800 to 8,000. Further, the organopolysiloxane (a) does not substantially contain T0 as a T monomer.

With respect to the proportions of T1, T2 and T3 constituting the organopolysiloxane (a), (T2+T3)/(T1+T2+T3) is preferably within a range of from 0.85 to 1.00, more preferably from 0.90 to less than 1.00. Further, with respect to T3/T2, a preferred range is from 2.0 to 4.0.

By adjusting the proportions of T1, T2 and T3 constituting the organopolysiloxane (a) to be in such ranges in an average composition of the respective molecules, it becomes possible that when the organopolysiloxane (a) is combined with the after-described organopolysiloxane (b) to form a hard coating layer-forming composition of the present invention, the abrasion resistance of the finally obtainable hard coating layer can be improved.

The ratio of (B)/(A) in the organopolysiloxane (a) is a parameter indicating the condensation reactivity, and if this value becomes large, i.e. if the proportion of hydroxy groups becomes high as compared with alkoxy groups, the curing reaction at the time of forming a cured layer will be accelerated when the organopolysiloxane (a) and the organopolysiloxane (b) are combined and used as a hard coating layer-forming composition. Further, alkoxy groups which remain to be unreacted at the time of forming the cured layer, are likely to lead to deterioration of the abrasion resistance of the finally obtainable hard coating layer and may cause microcracks if post curing proceeds, and therefore, the proportion of hydroxy groups should better be high as compared with alkoxy groups. The ratio of (B)/(A) in the organopolysiloxane (a) is at least 12.0, preferably at least 16.0. Further, (A) may be 0.

If the value of (B)/(A) is less than 12.0, the proportion of hydroxy groups tends to be too low as compared with alkoxy groups, whereby the effect to accelerate the curing reaction tends to be hardly obtainable, and by the influence of alkoxy groups, deterioration of the abrasion resistance is likely to be led, or post curing is likely to proceed to cause micro cracking. That is, if the value of (B)/(A) is less than 12.0, at the time of forming a cured layer, a part of the organopolysiloxane (a) is likely to be included in the three dimensional crosslink structure (network) formed by the curing reaction of the organopolysiloxane (a) and the organopolysiloxane (b) and is likely to bleed out, thus causing problems such that the crosslinking density decreases, the abrasion resistance cannot be obtained, and the curing tends to hardly proceed.

The mass average molecular weight of the organopolysiloxane (a) is from 800 to 8,000, preferably from 1,000 to 6,000. As the mass average molecular weight of the organopolysiloxane (a) is within this range, it is possible that when the organopolysiloxane (a) and the organopolysiloxane (b) are used in combination for a hard coating layer-forming composition of the present invention, it is possible to improve the abrasion resistance of the finally obtainable hard coating layer.

In the present invention, in order to obtain an organopolysiloxane (a) to be used for a hard coating layer-forming composition to form a hard coating layer excellent particularly in the abrasion resistance, it is preferred to use a raw material hydrolyzable silane compound wherein at least 70 mass% of all T monomers is a methyl trialkoxysilane, wherein the number of carbon atoms of the alkoxy groups is from 1 to 4. However, for the purpose of improving the adhesion or providing functions such as hydrophilicity, water repellency, etc. T monomers other than the methyl trialkoxysilane may be used in combination in a small amount.

As a method for producing the organopolysiloxane (a) as mentioned above, the monomer is subjected to a hydrolytic condensation reaction in a solvent in the presence of an acid catalyst. Here, water required for the hydrolysis is usually from 1 to 10 equivalents, preferably from 1.5 to 7 equivalents, more preferably from 3 to 5 equivalents, per 1 equivalent of the monomer. The hydrolysis and condensation of the monomer can be carried out in a reaction system where a colloidal silica (as described hereinafter) is present, and in a case where an aqueous dispersion type colloidal silica is used as such a colloidal silica, water is supplied from such an aqueous dispersion. The amount of the acid catalyst to be used is preferably from 0.1 to 50 parts by mass, particularly preferably from 1 to 20 parts by mass, per 100 parts by mass of the monomer. As the solvent, the above-mentioned alcohol type solvent is preferred, and specifically, methanol, ethanol, 2-propanol, 1-butanol or 2-butanol is particularly preferred from such a viewpoint that the solubility of the obtainable organopolysiloxane (a) will be good.

Usually, the reaction temperature is from 20 to 40°C, and the reaction time is from 1 hour to a few days. The hydrolytic condensation reaction of the monomer is an exothermic reaction, but the temperature of the system should better not exceed 60°C. It is preferred that under such conditions, the hydrolysis reaction is sufficiently proceeded, and then for the stability of the obtainable organopolysiloxane, the condensation reaction is proceeded at a temperature of from 40 to 80°C for from 1 hour to a few days.

The organopolysiloxane (a) may also be produced from a commercially available organopolysiloxane. A commercially available organopolysiloxane is usually an organopolysiloxane wherein the proportion of alkoxy groups is high as compared with hydroxy groups, and accordingly, it is preferred that by using a commercially available organopolysiloxane similar to the desired organopolysiloxane (a) except for the ratio of (B)/(A), the proportion of hydroxy groups is increased by a hydrolysis reaction to produce the organopolysiloxane (a).

A commercially available organopolysiloxane useful as a raw material for the organopolysiloxane (a), may, for example, be the following organopolysiloxane which is a partial hydrolytic condensation product of methyltrimethoxysilane. Here, the symbol "ND" means that when the peak area ratio of ²⁹Si-NMR is measured by means of nuclear magnetic resonance analyzer ECP400 (tradename) manufactured by JEOL Ltd., the result is not more than a detectable level (the same applies hereinafter).

Methyl type silicone resin KR-220L (tradename, manufactured by Shin-Etsu Chemical Co., Ltd.); T0:T1:T2:T3=ND:ND:28:72, Si-OH/SiO-CH₃=11.7, mass average molecular weight of Mw=4,720, number average molecular weight Mn=1,200, Mw/Mn=3.93.

Methyl type silicone resin KR-500, (tradename, manufactured by Shin-Etsu Chemical Co., Ltd.); T0:T1:T2:T3=ND:15:58:27, the peak attributable to the Si-OH group is not detected by FT-IR, substantially only SiO-CH₃ is present. Mw=1,240, Mn=700, Mw/Mn=1.77.

In a case where an organopolysiloxane (a) is produced from such a commercially available organopolysiloxane, it is preferred to subject the commercially available organopolysiloxane to mainly the hydrolysis of alkoxy groups in the presence of an acid catalyst. For example, a method may be mentioned wherein to the commercially available organopolysiloxane, a solvent in an amount of from 0 to 10 times (by mass) is added and thoroughly mixed, and then an aqueous acid solution at a concentration of from about 0.1 to 70 mass% is added, followed by stirring at a temperature of from 15 to 80°C, preferably from 20 to 70°C, for from 1 to 24 hours. As the solvent to be used, water may be used, or the above mentioned alcohol type solvent having water added thereto, may also be used.

### (Organopolysiloxane (b))

The organopolysiloxane (b) to be used in combination with the organopolysiloxane (a) in the hard coating layer-forming composition of the present invention, is an organopolysiloxane having a mass average molecular weight between 1/10 and 1/1.5 of the mass average molecular weight of the organopolysiloxane (a). The organopolysiloxane (b) is an organopolysiloxane having a mass average molecular weight smaller than the organopolysiloxane (a) and has the above-described units T1 to T3. The ratio in number of T1 :T2:T3, the ratio of T3/T2 and the ratio of (B)/(A) are not particularly limited.

The mass average molecular weight of the organopolysiloxane (b) is preferably between 1/8 and 1/1.5 of the mass average molecular weight of the organopolysiloxane (a) to be combined. If the mass average molecular weight of the organopolysiloxane (b) exceeds 1/1.5 of the mass average molecular weight of the organopolysiloxane (a), i.e. if the mass average molecular weight of the organopolysiloxane (a) is less than 1.5 times the mass average molecular weight of the organopolysiloxane (b), the toughness of the finally obtainable hard coating layer tends to be low, and such becomes a cause to form cracks. Further, if the mass average molecular weight of the organopolysiloxane (b) is less than 1/10 of the mass average molecular weight of the organopolysiloxane (a), i.e. if the mass average molecular weight of the organopolysiloxane (a) exceeds ten times the mass average molecular weight of the organopolysiloxane (b), the abrasion resistance of the finally obtainable hard coating layer tends to be low, whereby it is possible that it becomes difficult to obtain a hard coating layer having sufficient abrasion resistance.

A more preferred organopolysiloxane (b) is an organopolysiloxane wherein the respective silicon-containing bond units represented by T0, T1, T2 and T3 are within a range of T0:T1:T2:T3=0-5:0-50:5-70:10:90, in a ratio by number of such units. The proportions of T0 and T1 in the organopolysiloxane (b) being large usually indicates that at the time of producing such an organopolysiloxane, the hydrolytic reaction or the condensation reaction of the raw material monomer was insufficient. In the organopolysiloxane (b), if the proportions of T0 and T1 are large, at the time of heat curing to form a cured layer by using a hard coating layer-forming composition comprising it and the organopolysiloxane (a), formation of cracks tends to increase. Further, usually, if the condensation reaction of the raw material monomer is proceeded too much at the time of producing an organopolysiloxane, the proportion of T3 in the obtainable organopolysiloxane tends to be high. In the organopolysiloxane (b), if the proportion of T3 becomes higher than necessary, a proper crosslinking reaction tends to be difficult at the time of heat curing to form a cured layer by using the hard coating layer-forming composition comprising it and the organopolysiloxane (a), whereby the cured layer may not be formed, or it becomes difficult finally to obtain a hard coating layer having sufficient abrasion resistance.

The organopolysiloxane (b) can be produced from a T monomer or the like in the same manner as the organopolysiloxane (a). Further, a commercially available organopolysiloxane may be used as it is, as the organopolysiloxane (b). The following organopolysiloxanes may, for example, be mentioned as commercially available organopolysiloxanes which can be used as the organopolysiloxane (b). Here, the symbol "trace" means that when the peak area ratio of ²⁹Si-NMR is measured by means of a nuclear magnetic resonance analyzer ECP400 (tradename) manufactured by JEOL Ltd., it is at least 0.01 and at most 0.25 (the same applies hereinafter).

TOSGUARD 510 (tradename, manufactured by Momentive Performance Materials, Inc.); molecular weight: Mn=1,370, Mw=1,380, Mw/Mn=1.01. Number of T units: (total amount of the respective numbers of M units, D units and Q units)=at least 99.9:ND. T0:T1:T2:T3=ND:2:36:62.

KP851 (tradename: manufactured by Shin-Etsu Chemical Co., Ltd.); molecular weight: Mn=1,390, Mw=1,400, Mw/Mn=1.01. Number of T units: (total amount of the respective numbers of M units and D units)=at least 99.9:ND.

### T0:T1:T2:T3=trace:21:58:21.

Here, in the hard coating layer-forming composition to be used in the present invention which will be described below, the ratio in content of the organopolysiloxane (b) to the organopolysiloxane (a) is preferably from 1.5 to 30 times, more preferably from 2 to 15 times, by mass ratio. When the hard coating layer-forming composition to be used in the present invention contains the two components in such a ratio, the three dimensional crosslinking structure of organopolysiloxanes to be formed by the curing reaction will have such a structure that the organopolysiloxane of component (a) is partially incorporated in the three dimensional crosslinking structure composed mainly of the organopolysiloxane (b), whereby the abrasion resistance of the finally obtainable hard coating layer will be good.

The hard coating layer-forming composition to be used in the present invention contains the above-described curable organopolysiloxane, preferably the organopolysiloxane (T). The content of the organopolysiloxane in the hard coating layer-forming composition is preferably from 50 to 100 mass%, more preferably from 60 to 95 mass%, based on the total amount of the composition excluding a solvent (hereinafter referred to as the "non-volatile component" as the case requires). In the present invention, the amount of the non-volatile component is measured based on the change in mass after holding at 150°C for 45 minutes.

In the present invention, the hard coating layer-forming composition containing the organopolysiloxane as the main component means that the organopolysiloxane is contained at least 50%, based on the total amount of various components of the hard coating layer-forming composition excluding the solvent.

### (Optional components)

The hard coating layer-forming composition to be used in the present invention may contain various additives in addition to the above organopolysiloxane. For example, in order to further improve the abrasion resistance of the hard coating layer of a resin substrate having the hard coating layer of the present invention, a hard coating layer-forming composition containing fine silica particles is preferred. For such a purpose, it is preferred to incorporate colloidal silica to the hard coating layer-forming composition. Here, the colloidal silica is meant for one having fine silica particles dispersed in water or an organic solvent such as methanol, ethanol, isobutanol or propylene glycol monomethyl ether.

Such fine silica particles (c) may be incorporated to the raw material monomer in a step of producing the organopolysiloxane. By producing the organopolysiloxane in a reaction system containing colloidal silica, it is possible to obtain the organopolysiloxane containing fine silica particles. For example, by adding a T monomer and, if required, water or an acid catalyst, to colloidal silica, it is possible to produce the organopolysiloxane as described above in the dispersion of colloidal silica. By using the organopolysiloxane thus obtained, it is possible to produce a hard coating layer-forming composition of the present invention containing fine silica particles.

The fine silica particles to be used for the hard coating layer-forming composition of the present invention preferably has an average particle size (BET method) of from 1 to 100 nm. If the average particle size exceeds 100 nm, the particles will diffusely reflect light, whereby the haze value of the obtainable hard coating layer tends to be large, such being undesirable from the viewpoint of the optical quality. Further, the average particle size is particularly preferably from 5 to 40 nm, whereby the transparency of the hard coating layer can be maintained while imparting the abrasion resistance to the hard coating layer. Further, the colloidal silica may be used in either a water-dispersed type or an organic solvent-dispersed type, but it is preferred to use a water-dispersed type. Further, it is particularly preferred to use colloidal silica dispersed in an acidic aqueous solution. Further, to the colloidal silica, fine inorganic particles other than fine silica particles, such as alumina sol, titanium sol or ceria sol, may be incorporated.

The content of the fine silica particles in the hard coating layer-forming composition to be used in the present invention is preferably from 1 to 50 mass%, more preferably from 5 to 40 mass%, based on the total amount of the composition excluding the solvent (the non-volatile component). If the content of the fine silica particles in the non-volatile component in the hard coating layer-forming composition to be used in the present invention is less than 1 mass%, adequate abrasion resistance may not be secured in the obtainable hard coating layer, and if the content exceeds 50 mass%, the proportion of the organopolysiloxane in the non-volatile component, tends to be too low, whereby it tends to be difficult to form a cured layer by heat curing of the organopolysiloxane, cracking is likely to be formed in the finally obtainable hard coating layer, or aggregation of fine silica particles is likely to take place to deteriorate the transparency of the hard coating layer.

The hard coating layer-forming composition to be used in the present invention may further contain an additive such as a defoaming agent or a viscosity-adjusting agent for the purpose of improving the coating properties, may contain an additive such as an adhesion-imparting agent for the purpose of improving the adhesion to the primer layer, or may contain a leveling agent as an additive for the purpose of improving the coating properties and the smoothness of the coating film thereby obtainable. The amounts of such additives to be incorporated are preferably from 0.01 to 2 parts by mass of each additive, based on 100 parts by mass of the organopolysiloxane. Further, the hard coating layer-forming composition to be used in the present invention may contain a dye, a pigment, a filler, etc. within a rage not to impair the purpose of the present invention.

The hard coating layer-forming composition to be used in the present invention may further contain a curing catalyst. The curing catalyst may, for example, be an alkali metal salt such as a lithium salt, a sodium salt or a potassium salt, of an aliphatic carboxylic acid (such as formic acid, acetic acid, propionic acid, butyric acid, lactic acid, tartaric acid or succinic acid); a quaternary ammonium salt such as a benzyltrimethylammonium salt, a tetramethylammonium salt or tetraethylammonium salt; a metal alkoxide or chelate of e.g. aluminum, titanium or cerium; ammonium perchlorate, ammonium chloride, ammonium sulfate, sodium acetate, an imidazole or its salt, ammonium trifluoromethyl sulfonate, or bis(trifluoromethylsulfonyl)bromomethyl ammonium. Here, the amount of the curing catalyst to be incorporated is preferably from 0.01 to 10 parts by mass, more preferably from 0.1 to 5 parts by mass, per 100 parts by mass of the organopolysiloxane. If the content of the curing catalyst is less than 0.01 part by mass, a sufficient curing rate tends to be hardly obtainable, and if it exceeds 10 parts by mass, the storage stability of the hard coating layer-forming composition tends to be deteriorated, or precipitates are likely to be formed.

Further, the hard coating layer-forming composition to be used in the present invention preferably further contains an ultraviolet absorber to prevent yellowing of the resin substrate. Such an ultraviolet absorber may, for example, be a benzophenone type ultraviolet absorber, a benzotriazole type ultraviolet absorber, a benzimidazole type ultraviolet absorber, a cyanoacrylate type ultraviolet absorber, a salicylate type ultraviolet absorber, a benzylidenemalonate type ultraviolet absorber or a triazine type ultraviolet absorber. One type of such ultraviolet absorbers may be used alone, or two or more types may be used in combination. Further, in order to prevent bleeding out of such an ultraviolet absorber from the finally obtainable hard coating layer, an ultraviolet absorber having a trialkoxysilyl group will be converted to a hydroxy group by a hydrolytic reaction at the time of forming a cured layer by heat curing of the organopolysiloxane, and then incorporated in the cured layer by a dehydration condensation reaction, whereby it is possible to prevent bleeding out of the ultraviolet absorber from the hard coating film. Specifically, such a trialkoxysilyl group may, for example, be a trimethoxysilyl group or a triethoxysilyl group. The content of the ultraviolet absorber in the hard coating layer-forming composition is preferably from 0.1 to 50 parts by mass, particularly preferably from 0.1 to 30 parts by mass, per 100 parts by mass of the organopolysiloxane.

Further, in the present invention, in order to prevent gelation of the hard coating layer-forming composition at ordinary temperature and to increase the storage stability, it is preferred to adjust the pH of the hard coating layer-forming composition to be from 2.0 to 7.0, more preferably from 3.0 to 6.0, further preferably from 4.0 to 5.5. If the pH is at most 2.0 or at least 7.0, hydroxy groups bonded to silicon atoms tend to be very unstable, such being not suitable for storage. As a means to adjust the pH, addition of an acid or adjustment of the content of the curing catalyst may, for example, be mentioned. Such an acid may, for example, be an inorganic acid such as hydrochloric acid, sulfuric acid, nitric acid, phosphoric acid, nitrous acid, perchloric acid or sulfamic acid, or an organic acid such as formic acid, acetic acid, propionic acid, butyric acid, oxalic acid, succinic acid, maleic acid, lactic acid or p-toluenesulfonic acid.

The hard coating layer-forming composition to be used in the present invention is usually prepared in a form wherein the organopolysiloxane as the essential component, and various additives as optional components, are dissolved or dispersed in a solvent. It is necessary that all non-volatile components in the hard coating layer-forming composition are stably dissolved or dispersed, and for such a purpose, the solvent is contained in an amount of at least 20 mass%, preferably at least 50 mass%. More preferably, an alcohol solvent is contained in an amount of at least 20 mass%, more preferably at least 50 mass%.

As an alcohol to be used for such a solvent, methanol, ethanol, 1-propanol, 2-propanol, 1-butanol, 2-butanol, 2-methyl-1-propanol, 1-methoxy-2-propanol, 2-ethoxyethanol, diacetone alcohol or 2-butoxyethanol is preferred. Among them, an alcohol having a boiling point of from 80 to 160°C is preferred from such a viewpoint that the solubility of the organopolysiloxane is good, and the coating properties are good. Specifically, ethanol, 1-propanol, 2-propanol, 1-butanol, 2-butanol, 2-methyl-1-propanol, 1-methoxy-2-propanol, 2-ethoxyethanol, diacetone alcohol or 2-butoxyethanol is preferred.

Further, the solvent to be used for the hard coating layer-forming composition to be used in the present invention includes a lower alcohol or the like generated along the hydrolysis of the raw material monomer such as an alkyltrialkoxysilane at the time of producing the organopolysiloxane, water in the water-dispersed type colloidal silica, which is not involved in the hydrolytic reaction, and, in a case where an organic solvent-dispersed type colloidal silica is used, such a dispersing organic solvent.

Further, in the hard coating layer-forming composition to be used in the present invention, a solvent other than the alcohol which can be mixed with water/alcohol, may be used in combination as a solvent other than the above described solvent, and as such a solvent, a ketone such as acetone or acetyl acetone; an ester such as ethyl acetate or isobutyl acetate, or an ether such as propylene glycol monomethyl ether, dipropylene glycol monomethyl ether or diisopropyl ether may be mentioned.

The amount of the solvent to be used in the hard coating layer-forming composition to be used in the present invention is preferably from 50 to 3,000 parts by mass, more preferably from 150 to 2,000 parts by mass, per 100 parts by mass of the total non-volatile component in the hard coating layer-forming composition.

The hard coating layer-forming composition to be used in the present invention is obtained by uniformly mixing the above-described various components by a usual method.

### (Coating and curing)

The resin substrate provided with a hard coating film of the present invention can be produced by applying the above-described hard coating layer-forming composition on a primer layer obtained as described above, to form a coating layer and curing the curable composition containing the organopolysiloxane as the main component in the coating layer, to form a hard coating layer.

The method for applying the hard coating layer-forming composition is not particularly limited and may, for example, be a usual coating method such as a spray coating method, a flow coating method, a die coating method or a spin coating method. It is preferred to suitably adjust the viscosity, the solid content concentration, etc. of the hard coating layer-forming composition depending upon the coating method.

The silicon type hard coating layer-forming composition applied to the primer layer is usually dried under a temperature condition of at least 0°C and not higher than the heat-deformation temperature of the resin substrate or the primer layer to remove the solvent, and then heat-cured. The conditions to dry the solvent may, for example, be conditions of from 0 to 60°C for from 10 minutes to 10 hours. Otherwise, vacuum drying may, for example, be used while adjusting the vacuuming degree. The heat-curing reaction is preferably carried out at a high temperature within a range not to bring about a problem in the heat resistance of the resin substrate and the primer layer, so that curing can be quickly completed. However, for example, in a case where an organopolysiloxane having a methyl group as a monovalent organic group is used, if the temperature during the heat curing is 250°C or higher, the methyl group will be detached by heat decomposition, such being undesirable. Therefore, the curing temperature is preferably from 50 to 200°C, more preferably from 80 to 160°C, particularly preferably from 100°C to 140°C. The curing time is preferably from 10 minutes to 4 hours, more preferably from 20 minutes to 3 hours, particularly preferably from 30 minutes to 2 hours.

The thickness of a coating film formed by applying the hard coating layer-forming composition on the surface of a resin substrate, depends on the solid content concentration in the composition. It is preferably suitably adjusted, for example, by taking the solid content concentration into consideration, so that the film thickness after curing will be within the predetermined range.

The thickness of the cured layer formed on the resin substrate is preferably from 0.1 µm to 10 µm, more preferably from 1 µm to 8 µm, particularly preferably from 2 µm to 8 µm, in its state after curing.

If the thickness of the hard coating layer is too thin, it tends to be difficult to secure sufficient abrasion resistance. On the other hand, if the thickness of the hard coating layer is too thick, cracking or delamination is likely to occur. Accordingly, in order to prevent cracking or delamination while securing sufficient abrasion resistance, the thickness of the cured layer (i.e. the thickness of the hard coating layer) is preferably from 0.1 µm to 10 µm.

Here, the thickness means the thickness at the time when the hard coating layer is formed alone on a substrate such as a resin substrate.

In the resin substrate having a hard coating layer of the present invention, a top coating layer containing SiO₂ as the main component, may be formed on the hard coating layer of the above-described resin substrate having the hard coating layer in order to further improve the abrasion resistance or film strength. As the method for forming a top coating layer containing SiO₂ as the main component, it is preferred to employ a method of applying and curing a poly(perhydro)silazane on the hard coating layer or to employ a method of vapor deposition or sputtering.

In the foregoing, the resin substrate 1 provided with a hard coating film of the present invention has been described, but it should be understood that the present invention is by no means limited to such a construction, and the order for forming various components, etc., may suitably be changed within a range where production of the resin substrate 1 provided with a hard coating film is possible.

### EXAMPLES

Now, the present invention will be described in further detail with reference to Examples, but it should be understood that the present invention is by no means limited to these Examples. Examples 1 to 5 are Working Examples of the present invention, and Examples 6 to 8 are Comparative Examples.

### [1] Preparation of primer layer-forming composition

### [1-1] Polymethyl methacrylate solution

Polymethyl methacrylate (PMMA) (number average molecular weight Mn=120,000, mass average molecular weight Mw=340,000, dispersion degree: Mw/Mn=2.8) and ultraviolet absorber dibenzoresorcinol (DBR manufactured by Clariant) were blended in such a ratio that DBR was 10 parts by mass per 100 parts by mass of PMMA. This mixture was dissolved in a solvent of 1-methoxy-2-propanol:diacetone alcohol=85:15 (mass ratio) and adjusted so that the non-volatile component would be 10 mass%, to obtain a polymethyl methacrylate solution P-1.

Herein Mn, Mw and Mw/Mn of the polymethyl methacrylate were obtained by gel permeation chromatography (GPC, HLC-8220GPC manufactured by TOSOH CORPORATION, RI detection, column: TSKguardcolum Super HZ-L +TSKgel SuperHZ4000+HZ3000+HZ2500+HZ2000, eluent: THF).

### [1-2] Preparation of Si group-containing acrylic resin solution

### (Synthesis Example 1)

Into a 0.5 L flask equipped with a stirrer, a condenser and a thermometer, 125 g of a toluene solution (non-volatile component: 22 mass%) of acrylic polymer JR4811 (tradename, manufactured by Mitsubishi Rayon Co., Ltd., molar ratio of polymerized units derived from methyl methacrylate (MMA), polymerized units derived from lauryl methacrylate (LMA), polymerized units derived from n-butyl methacrylate (BMA), and polymerized units derived from hydroxyethyl methacrylate (HEMA) being 67:3:21:9, MW:16,000) was introduced in a nitrogen stream, and 11.7 g of 3-isocyanatepropyltriethoxysilane (IPTE) and 0.004 g of dibutyltin dilaurate (manufactured by Tokyo Chemical Industry Co., Ltd.) as a catalyst, were added thereto, followed by a reaction at 80°C for 3 hours. The reaction solution was put into hexane to carry out purification by reprecipitation.

From a result of NMR measurement of the purified product, the modification ratio of the OH group (C-OH group) of the hydroxyethyl methacrylate (HEMA) was found to be 50%.

The obtained purified product was dissolved in a solvent of 1-methoxy-2-propanol:diacetone alcohol=85:15 (mass ratio) and adjusted so that the non-volatile content became 10 mass%. A Si group-containing acrylic resin solution thus obtained was designated as a Si group-containing acrylic resin solution S-1.

### (Synthesis Example 2)

Into a 0.5L flask equipped with a stirrer, a condenser and a thermometer, a mixture of 101 g of methyl methacrylate (MMA), 12 g of lauryl methacrylate (LMA), 45 g of n-butyl methacrylate (BMA), 9 g of hydroxyethyl methacrylate (HEMA), 17 g of 3-methacryloxypropyltrimethoxysilane (MPTM) and 274 g of diacetone alcohol, was put in a nitrogen stream and heated to 80°C. Further, 0.9 g of 2,2'-azobis(isobutyronitrile) was introduced as a polymerization initiator, followed by stirring at from 80 to 90°C for 3 hours to let MMA, LMA, BMA, HEMA and MPTM copolymerize. Here, the molar ratio of the respective monomer components was MMA:LMA:BMA:HEMA:MPTM=67:3:21:4.5:4.5. The obtained solution was diluted with 1-methoxy-2-propanol to bring the non-volatile content to be 10 mass% to obtain a Si group-containing acrylic resin solution S-2. Mw of the obtained Si group-containing acrylic resin was 75,000.

### [1-3] Preparation of primer layer-forming composition

### (Preparation Example 1)

80 g of the polymethyl methacrylate solution (P-1) and 20 g of the Si group-containing acrylic resin solution (S-1) were mixed to obtain a mixed solution. To this mixed solution, a HDI type blocked isocyanate TPA-B60E (manufactured by Asahi Kasei Corporation) was introduced in an amount of 1 equivalent to the OH group contained in the Si group-containing acrylic resin solution (S-1), and further, as ultraviolet absorbers, 0.8 g of dibenzoresorcinol (DBR, manufactured by Clariant) and 0.2 g of a triazine type ultraviolet absorber (TINUVIN 477, manufactured by BASF) were introduced to obtain a primer layer-forming composition Pr-1.

### (Preparation Example 2)

80 g of the polymethyl methacrylate solution (P-1) and 20 g of the Si group-containing acrylic resin solution (S-1) were mixed to obtain a mixed solution. To this mixed solution, a HDI type blocked isocyanate TPA-B60E (manufactured by Asahi Kasei Corporation) was introduced in an amount of 1 equivalent to the OH group contained in the Si group-containing acrylic resin solution (S-1), and further, as ultraviolet absorbers, 0.8 g of dibenzoresorcinol (DBR, manufactured by Clariant) and 0.2 g of a triazine type ultraviolet absorber (TINUVIN 479, manufactured by BASF) were introduced to obtain a primer layer-forming composition Pr-2.

### (Preparation Example 3)

70 g of the polymethyl methacrylate solution (P-1) and 30 g of the Si group-containing acrylic resin solution (S-1) were mixed to obtain a mixed solution. To this mixed solution, a HDI type blocked isocyanate TPA-B60E (manufactured by Asahi Kasei Corporation) was introduced in an amount of 1 equivalent to the OH group contained in the Si group-containing acrylic resin solution (S-1), and further, as ultraviolet absorbers, 0.7 g of dibenzoresorcinol (DBR, manufactured by Clariant) and 0.3 g of a triazine type ultraviolet absorber (TINUVIN 477, manufactured by BASF) were introduced to obtain a primer layer-forming composition Pr-3.

### (Preparation Example 4)

60 g of the polymethyl methacrylate solution (P-1) and 40 g of the Si group-containing acrylic resin solution (S-1) were mixed to obtain a mixed solution. To this mixed solution, a HDI type blocked isocyanate TPA-B60E (manufactured by Asahi Kasei Corporation) was introduced in an amount of 1 equivalent to the OH group contained in the Si group-containing acrylic resin solution (S-1), and further, as ultraviolet absorbers, 0.6 g of dibenzoresorcinol (DBR, manufactured by Clariant) and 0.4 g of a triazine type ultraviolet absorber (TINUVIN 477, manufactured by BASF) were introduced to obtain a primer layer-forming composition Pr-4.

### (Preparation Example 5)

80 g of the polymethyl methacrylate solution (P-1) and 20 g of the Si group-containing acrylic resin solution (S-2) were mixed to obtain a mixed solution. To this mixed solution, a HDI type blocked isocyanate TPA-B60E (manufactured by Asahi Kasei Corporation) was introduced in an amount of 1 equivalent to the OH group contained in the Si group-containing acrylic resin solution (S-2), and further, as ultraviolet absorbers, 0.8 g of dibenzoresorcinol (DBR, manufactured by Clariant) and 0.2 g of a triazine type ultraviolet absorber (TINUVIN 477, manufactured by BASF) were introduced to obtain a primer layer-forming composition Pr-5.

### (Preparation Example 6)

To 100 g of the polymethyl methacrylate solution (P-1), 0.8 g of dibenzoresorcinol (DBR, manufactured by Clariant) and 0.2 g of a triazine type ultraviolet absorber (TINUVIN 477, manufactured by BASF) were introduced as ultraviolet absorbers to obtain a primer layer-forming composition Pr-6.

### (Preparation Example 7)

80 g of the polymethyl methacrylate solution (P-1) and 20 g of the Si group-containing acrylic resin solution (S-2) were mixed to obtain a mixed solution. To this mixed solution, 0.8 g of dibenzoresorcinol (DBR, manufactured by Clariant) and 0.2 g of a triazine type ultraviolet absorber (TINUVIN 477, manufactured by BASF) were introduced as ultraviolet absorbers to obtain a primer layer-forming composition Pr-7.

### (Preparation Example 8)

To 100 g of the Si-group-containing acrylic resin solution (S-1), a HDI type blocked isocyanate TPA-B60E (manufactured by Asahi Kasei Corporation) was introduced in an amount of 1 equivalent to the OH group contained in the Si group-containing acrylic resin solution (S-1), and further, as an ultraviolet absorber, 1 g of a triazine type ultraviolet absorber (TINUVIN 479, manufactured by BASF) were introduced to obtain a primer layer-forming composition Pr-8.

### [2] Hard coating layer-forming composition

Analyses of organopolysiloxanes were carried out with respect to the following items and by the following methods.

### (1) Number (B) of hydroxy groups bonded to silicon atoms/number (A) of alkoxy groups bonded to silicon atoms

Organopolysiloxanes used in the following Examples were only those having methoxy groups bonded to silicon atoms (SiO-CH₃) as alkoxy groups bonded to silicon atoms, and therefore, as the above (B)/(A), a ratio of Si-OH/SiO-CH₃ obtained by the following method, was used.

Using an infrared absorption analyzer (FT-IR, model: Avatar/Nicolet FT-IR360, manufactured by Thermo Fisher Scientific K.K.), the ratio in number of Si-OH/SiO-CH₃ was obtained from the area ratio of the absorption attributable to SiO-CH₃ in the vicinity of 2,860 cm⁻¹ and the absorption attributable to Si-OH in the vicinity of 900 cm⁻¹.

### (2) Analyses of bonding states of silicon atoms in organopolysiloxanes (silicone compounds)

The bonding states of silicon atoms in organopolysiloxanes, specifically, the abundance ratios of T0 to T3 were respectively obtained from the peak area ratios of ²⁹Si-NMR by means of a nuclear magnetic resonance analyzer (²⁹Si-NMR: ECP400 manufactured by JEOL Ltd.). The measuring conditions are such that a 10 mmΦ test tube made of a polytetrafluoroethylene is used, proton decoupling is carried out, the pulse width is 45°, the waiting time is 15 sec, the relaxation agent contains 0.1 mass% of Cr (acac)₃, and the external standard sample is tetramethylsilane. Further, the chemical shifts of ²⁹Si-NMR attributable to the respective structures are as follows. (T0 to T3)
T0: -40 to -41 ppm,
T1: -49 to -50 ppm,
T2: -57 to -59 ppm,
T3: -66 to -70 ppm.

### (3) Number average molecular weight Mn, mass average molecular weight Mw and dispersivity Mw/Mn

They were obtained by means of gel permeation chromatography (GPC, Waters 2695 manufactured by Waters Corporation, RI detection, column: Styragel guard colum+HR1+HR4+HR5E, eluent: chloroform).

### [2-1] Synthesis of organopolysiloxane (hereinafter referred to as "component (a) organopolysiloxane" as the case requires) and preparation of solution containing organopolysiloxane (a)

Into a 0.2L flask, 10 g of a methyl type silicone resin KR-500 (manufactured by Shin-Etsu Chemical Co., Ltd., no peak attributable to Si-OH groups is detected by FT-IR, substantially SiO-CH₃ only, the abundance ratios of T units are T0:T1:T2:T3=ND:15:58:27, Mn=700, Mw=1,240, Mw/Mn=1.77) and 10 g of 1-butanol were added and thoroughly stirred, and 10 g of acetic acid and 10 g of ion exchanged water were added and further thoroughly stirred. This solution was stirred at 40°C for 1 hour to obtain a solution containing component (a) organopolysiloxane MSi-1 (MSi-1 concentration:25 mass%).

With respect to the obtained MSi-1, a comparison with KR-500 being the raw material was carried out by means of FT-IR and ¹H-NMR, whereby a decrease of the peak attributable to SiO-CH₃ groups and appearance of a peak attributable to Si-OH groups were confirmed. The ratio of Si-OH/SiO-CH₃ in MSi-1 obtained from the peak area ratio of FT-IR was 41.0. MSi-1 was constituted by T units, and the abundance ratios of the respective T units obtained from the chemical shifts of ²⁹Si-NMR were T0:T1:T2:T3=ND:1.1:30.1:68.8. Further, Mn of MSi-1 was 520, Mw was 1,150, and Mw/Mn was 2.22.

### [2-2] Synthesis of organopolysiloxane (b) (hereinafter referred as "component (b) organopolysiloxane", as the case requires) and preparation of a solution of organopolysiloxane (b) composition

Into a 1L flask, 167 g of silica sol dispersed in water and having an average particle size of about 30 nm (pH:3.1, solid content of fine silica particles:20%) and 14 g of acetic acid were charged, and 136 g of methyltrimethoxysilane was added. After stirring for 1 hour, the pH of the composition was stabilized at 4.5. This composition was aged at 25°C for 4 days to let it undergo partial hydrolytic condensation, thereby to obtain a solution containing component (b) organopolysiloxane PSi-1 (PSi-1 concentration: 40 mass%).

The obtained component (b) organopolysiloxane PSi-1 had a bonding structure constituted mainly by T units, and the abundance ratios of the respective T units obtained from the chemical shifts of ²⁹Si-NMR were T0:T1:T2:T3=ND:2:54:44. In the obtained organopolysiloxane (b), monomer-form T0 [R-Si(OH)₃] (R is CH₃) was not substantially present, and it was confirmed that the raw material methyltrimethoxysilane was substantially completely converted to an oligomer-form organopolysiloxane. Mn of the obtained component (b) organopolysiloxane PSi-1 was 400, Mw was 670, and Mw/Mn was 1.68.

Then, to 100 parts by mass of the component (b) organopolysiloxane (PSi-1) obtained as described above, 4 parts by mass of a benzophenone type ultraviolet absorber was added, followed by aging at 25°C for at least 24 hours. By using, as a diluting solvent, a mixed solvent of 1-butanol:isopropanol:methanol:1-methoxy-2-propanol=40:40:15:5 (mass ratio), a solution of organopolysiloxane (b) PSi-1 composition having a non-volatile component of 25 mass% (150°C, 45 minutes) and a viscosity of 4.4 mPa·s, was prepared.

### [2-3] Preparation of hard coating layer-forming composition

To the solution containing component (a) organopolysiloxane MSi-1 obtained in the above [2-1], the solution of the composition containing component (b) organopolysiloxane PSI-1 obtained in the above [2-2] was blended in a ratio of MSi-1:PSi-1=80:20 (mass ratio) and thoroughly mixed to obtain a hard coating layer-forming composition HC-1.

### [3] Preparation of resin substrate provided with hard coating film

By using the primer layer-forming composition and the hard coating layer-forming composition obtained as described above, the resin substrate provided with a hard coating film in each of Examples 1 to 5 and 6 to 9 was prepared as follows. Here, the thickness of each of the following primer layers and the hard coating layers was the thickness of each layer which was formed alone on a polycarbonate plate, and it was measured by means of an interface film thickness measuring apparatus (Solid Lambda Thickness, manufactured by Spectra Co-op). At that time, as the refractive index, a value of n=1.56 was used for the primer layer, and a value of n=1.46 was used for the hard coating layer. That is, the film forming conditions were set so that the film thickness will be such a value when formed alone on a polycarbonate plate, and each layer was formed under such conditions.

### (Example 1)

On a polycarbonate resin plate having a thickness of 3 mm (CARBOGLASS, (registered trademark) Polish Clear (tradename, manufactured by Asahi Glass Company, Limited)), the primer layer-forming composition Pr-1 was applied by a dip coating method so that the film thickness would be 4 µm, then left to stand at 25°C for 20 minutes and then cured at 120°C for 30 minutes by means of a hot air circulating dryer (HISPEC HS250, manufactured by Kusumoto Chemicals, Ltd.).

Then, on the primer layer thus formed, the hard coating layer-forming composition HC-1 was applied by a dip coating method so that the film thickness would be 3 µm, then left to stand at 25°C for 20 minutes and then heated and cured at 120°C for 1 hour. This operation was applied on both surfaces of the polycarbonate resin plate to prepare a resin substrate provided with a hard coating film.

### (Example 2)

A resin substrate provided with a hard coating film was prepared in the same manner as in Example 1 except that instead of the primer layer-forming composition Pr-1, the primer layer-forming composition Pr-2 was used.

### (Example 3)

A resin substrate provided with a hard coating film was prepared in the same manner as in Example 1 except that instead of the primer layer-forming composition Pr-1, the primer layer-forming composition Pr-3 was applied by a dip coating method so that the film thickness would be 5 µm.

### (Example 4)

A resin substrate provided with a hard coating film was prepared in the same manner as in Example 1 except that instead of the primer layer-forming composition Pr-1, the primer layer-forming composition Pr-4 was used.

### (Example 5)

A resin substrate provided with a hard coating film was prepared in the same manner as in Example 1 except that instead of the primer layer-forming composition Pr-1, the primer layer-forming composition Pr-5 was applied by a dip coating method so that the film thickness would be 5 µm.

### (Example 6)

A resin substrate provided with a hard coating film was prepared in the same manner as in Example 1 except that instead of the primer layer-forming composition Pr-1, the primer layer-forming composition Pr-6 was used.

### (Example 7)

A resin substrate provided with a hard coating film was prepared in the same manner as in Example 1 except that instead of the primer layer-forming composition Pr-1, the primer layer-forming composition Pr-7 was used.

### (Example 8)

A resin substrate provided with a hard coating film was prepared in the same manner as in Example 1 except that instead of the primer layer-forming composition Pr-1, the primer layer-forming composition Pr-8 was used.

### [4] Evaluation of resin substrate provided with hard coating film

With respect to the resin substrate provided with a hard coating film obtained in each of Examples 1 to 5 and 6 to 8 in the above [3], evaluations of the following items were carried out. In Table 1, the results of measurements and evaluations of the initial appearance, film thickness, abrasion resistance, adhesion, and the appearance (weather-cracking resistance) and weather resistant adhesion after the weather resistance test, are shown together with the type of the primer layer-forming composition and the thickness of each layer constituting the hard coating film.

### <1> Initial evaluations

### <1-1> Appearance

The appearance of the initial hard coating film (the entire coating film including the primer layer and the hard coating layer) was visually observed, whereby the presence or absence of abnormality was judged by the following standards.
○: No abnormality observed
×: Cracking or delamination was observed in the hard coating film

### <1-2> Abrasion resistance

In accordance with JIS K7105 (6.4), the haze (haze value) was measured by means of a haze meter, model: HGM-2, manufactured by Suga Test Instruments Co., Ltd.).

Further, in accordance with JIS K5600 (5.9), on a Taber abrasion tester (model: ROTARY ABRASION TESTER, manufactured by Toyo Seiki Seisaku-Sho, Ltd.), a truck wheel CALIBRASE (registered trademark) CS-10F (manufactured by TABER Industries) was mounted and rotated 500 times under a load of 500 g, whereupon the haze (haze value) was measured, and the haze difference ΔH₅₀₀ between before and after the test was taken as the abrasion resistance.

As an evaluation standard for the abrasion resistance, ΔH₅₀₀≦+10 is judged to be acceptable.

### <1-3> Adhesion

In accordance with JIS K5600 (5.6), by means of a razor blade, 11 cut lines were made in the hard coating film at 1 mm intervals in each of the vertical and horizontal directions to form 100 squares, and Sellotape (registered trademark) (CT24, manufactured by NICHIBAN CO., LTD.) was well bonded thereto, followed by a peel test. The number of squares where the hard coating film remained without delamination was X, and the initial adhesion was represented by X/1 00.

### <2> Weather resistance test

The following weather resistance test was carried out. That is, by using an accelerated weather resistance tester (DAIPLA METAL WEATHER KW-R5TP-A manufactured by DAIPLA WINTES CO., LTD) employing a metal halide lamp as a light source, three conditions of light irradiation, dew condensation and total darkness were continuously applied for 50 cycles (600 hours).

Here, the conditions for the above irradiation are such that light is applied for 4 hours under such conditions that the illuminance is 80 mW/cm², the black panel temperature is 63°C and the relative humidity is 80%; the conditions for the dew condensation are such that the black panel temperature is naturally left to cool from 63°C to 30°C and maintained for 4 hours under a condition of a relative humidity of 80% without irradiation with light; and the conditions for the above total darkness are such that the sample is maintained for 4 hours without irradiation with light under such conditions that the black panel temperature is 75°C and the relative humidity is 90%. Here, the illuminance at the time of the irradiation is one measured by an illuminance meter (tradename "UIT-101", manufactured by USHIO INC.). Further, before and after the dew condensation, showering was carried out for 10 seconds each time.

### <2-1> Weather-cracking resistance

After the weather resistance test, the appearance of the hard coating film was visually observed, and the presence or absence of abnormality was judged by the following standards.
○: No abnormality observed.
×: Cracking or delamination observed in the hard coating film

### <2-2> Weather resistant adhesion

In accordance with JIS K5600 (5.6), by means of a razor blade, 11 cut lines were made in the hard coating film after the weather resistance test at 1 mm intervals in each of the vertical and horizontal directions to form 100 squares, and Sellotape (registered trademark) (CT24, manufactured by NICHIBAN CO., LTD.) was well bonded thereto, followed by a peel test. The number of squares where the hard coating film remained without delamination was X, and the weather resistance was represented by X/1 00.

**[Table 1]**

| | Type of primer layer-forming composition | Type of Si group-containing acrylic resin solution | Thicknesses of the respective layers in hard coating film (µm) | | Evaluation results of resin substrate provided with hard coating film | | | | | |
|---|---|---|---|---|---|---|---|---|---|---|
| | | | Primer layer | Hard coating layer | Initial | | | | After weather resistance tests | |
| | | | | | Appearance | Haze | Adhesion | Abrasion resistance ΔH₅₀₀ | Appearance | adhesion |
| Ex. 1 | Pr-1 | S-1 | 4 | 3 | ○ | 0.5 | 100/100 | 8 | ○ | 100/100 |
| Ex. 2 | Pr-2 | S-1 | 4 | 3 | ○ | 0.6 | 100/100 | 7 | ○ | 100/100 |
| Ex. 3 | Pr-3 | S-1 | 5 | 3 | ○ | 0.7 | 100/100 | 7 | ○ | 100/100 |
| Ex. 4 | Pr-4 | S-1 | 4 | 3 | ○ | 0.8 | 100/100 | 8 | ○ | 100/100 |
| Ex. 5 | Pr-5 | S-2 | 5 | 3 | ○ | 0.7 | 100/100 | 8 | ○ | 100/100 |
| Ex. 6 | Pr-6 | Nil | 4 | 3 | ○ | 0.4 | 100/100 | 8 | × | 0/100 |
| Ex. 7 | Pr-7 | S-2 | 4 | 3 | ○ | 3.8 | 100/100 | 11 | × | 0/100 |
| Ex. 8 | Pr-8 | S-1 | 5 | 3 | ○ | 0.4 | 100/100 | 6 | × | 0/100 |

As is evident from Table 1, with the resin substrate provided with a hard coating film in each of Examples 1 to 5, which has a primer layer wherein a silyl group-containing acrylic polymer (α) having a hydrolyzable silyl group and a hydroxyalkyl group bonded to a side chain and a compound (β) having at least two crosslinkable functional groups (isocyanate groups) (a HDI type blocked isocyanate) are incorporated, the initial haze (haze value) was small, the appearance was good, the haze (haze value) difference after the Taber test was at most 10, and the abrasion resistance was acceptable. Further, the appearance of the hard coating film after the weather resistance test was good, and yet, the weather resistant adhesion was excellent, and the adhesion between the hard coating layer and the primer layer was found to be improved.

Whereas, with the resin substrate provided with a hard coating film in Example 6 wherein the primer layer did not contain the silyl group-containing acrylic polymer (α), although at the initial stage, the haze (haze value) was small, the appearance was good and the abrasion resistance was also acceptable, after the weather resistance test, cracking and delamination resulted in the hard coating film, the judgment of the appearance after the weather resistance was "x", and the adhesion was poor.

Further, with the resin substrate provided with a hard coating film in Example 7 wherein the primer layer did not contain the compound (β) having at least two crosslinkable functional groups (isocyanate groups) (a HDI type blocked isocyanate), the adhesion between the hard coating layer and the primer layer was inadequate, whereby the initial haze (haze value) was large, and the haze (haze value) difference after the Taber test was large, and the initial abrasion resistance of the hard coating film was inadequate. Further, cracking and delamination resulted in the hard coating film after the weather resistance test, whereby not only the judgment of the appearance after the weather resistance test was "×" i.e. not acceptable, but also the adhesion was poor.

Further, with the resin substrate provided with a hard coating film in Example 8 wherein the primer layer did not contain the acrylic polymer (P), although at the initial stage, the haze (haze value) was small, the outer appearance was good, and the abrasion resistance was also acceptable, the followability of the primer layer to a deformation of the resin substrate was poor, and after the weather resistance test, cracking and delamination resulted in the hard coating film, whereby the judgment of the appearance after the weather resistance test was "×", and the adhesion was poor.

### INDUSTRIAL APPLICABILITY

The resin substrate provided with a hard coating film obtainable by the present invention has excellent abrasion resistance and weather resistance and thus is useful for e.g. a window material for vehicles, to be attached to automobiles or various transportation means, or as a window material for buildings to be attached to building constructions such as houses or buildings.

The entire disclosure of Japanese Patent Application No. 2010-284381 filed on December 21, 2010 including specification, claims, drawings and summary is incorporated herein by reference in its entirety.

### REFERENCE SYMBOLS

1: resin substrate equipped with hard coating film, 2: resin substrate, 3: primer layer, 4: hard coating layer, S: interface between primer layer and hard coating layer

## Claims

1. A resin substrate provided with a hard coating film, which comprises a resin substrate, and, formed on at least one surface of the resin substrate in order from the resin substrate side, a primer layer containing as the main component an acrylic polymer (P) and a hard coating layer containing as the main component a cured product of an organopolysiloxane, wherein
the acrylic polymer (P) is constituted by polymerized units derived from an alkyl methacrylate having a C₁₋₆ alkyl group, and from 90 to 100 mol% in all polymerized units constituting the acrylic polymer (P) is polymerized units derived from methyl methacrylate;
the primer layer further contains a modified product (X) obtained by reacting a silyl group-containing acrylic polymer (α) and a compound (β) having at least two crosslinkable functional groups reactive with hydroxy groups; and
the silyl group-containing acrylic polymer (α) has polymerized units derived from methyl methacrylate (MMA), polymerized units having a hydrolysable silyl group and/or a SiOH group and polymerized units having a hydroxyalkyl group, and from 50 to 95 mol% in all polymerized units constituting the silyl group-containing acrylic polymer (α), is polymerized units derived from methyl methacrylate (MMA).

2. The resin substrate provided with a hard coating film according to Claim 1, wherein the silyl group-containing acrylic polymer (α) contains polymerized units having a hydrolysable silyl group and/or a SiOH group in a proportion of from 0.5 to 49.5 mol% in all polymerized units constituting the silyl group-containing acrylic polymer (α).

3. The resin substrate provided with a hard coating film according to Claim 1 or 2, wherein the silyl group-containing acrylic polymer (α) contains polymerized units having a hydroxyalkyl group in a proportion of from 0.5 to 30 mol% in all polymerized units constituting the silyl group-containing acrylic polymer (α).

4. The resin substrate provided with a hard coating film according to any one of Claims 1 to 3, wherein the polymerized units having a hydrolysable silyl group and/or a SiOH group are polymerized units wherein the hydrolysable silyl group and/or the SiOH group is bonded to a side chain via a C-Si bond.

5. The resin substrate provided with a hard coating film according to any one of Claims 1 to 4, wherein the silyl group-containing acrylic polymer (α) does not contain polymerized units having an aromatic hydrocarbon group in a side chain.

6. The resin substrate provided with a hard coating film according to any one of Claims 1 to 5, wherein the silyl group-containing acrylic polymer (α) has a mass average molecular weight of from 5,000 to 300,000.

7. The resin substrate provided with a hard coating film according to any one of Claims 1 to 6, wherein the crosslinkable functional groups are at least one member selected from the group consisting of isocyanate groups, carbodiimide groups and epoxy groups.

8. The resin substrate provided with a hard coating film according to any one of Claims 1 to 7, wherein the modified product (X) is one obtainable by reacting some of hydroxyalkyl groups in the polymerized units having a hydroxyalkyl group and the crosslinkable functional groups in the compound (β) having at least two crosslinkable functional groups reactive with hydroxy groups.

9. The resin substrate provided with a hard coating film according to any one of Claims 1 to 8, wherein the primer layer contains a crosslinked product having at least two modified products (X) crosslinked by a reaction of hydroxyalkyl groups contained in one modified product (X) and the crosslinkable functional groups contained in another modified product (X).

10. The resin substrate provided with a hard coating film according to any one of Claims 1 to 9, wherein the acrylic polymer (P) as the main component of the primer layer has a mass average molecular weight of from 20,000 to 1,000,000.

11. The resin substrate provided with a hard coating film according to any one of Claims 1 to 10, wherein the content of the acrylic polymer (P) as the main component of the primer layer is from 50 to 98 mass% in the primer layer.

12. The resin substrate provided with a hard coating film according to any one of Claims 1 to 11, wherein the primer layer has a thickness of from 0.1 µm to 7 µm.

13. The resin substrate provided with a hard coating film according to any one of Claims 1 to 12, wherein the hard coating layer has a thickness of from 0.1 µm to 10 µm.

14. A process for producing a resin substrate provided with a hard coating film, which comprises a step of applying and drying, on at least one surface of a resin substrate, a primer layer-forming composition comprising as the main components an acrylic polymer (P) and a silyl group-containing acrylic polymer (α), to form a primer layer, and a step of applying and curing, on the primer layer, a hard coating layer-forming composition comprising as the main component an organopolysiloxane, to form a hard coating layer, wherein
the acrylic polymer (P) is constituted by polymerized units derived from an alkyl methacrylate having a C₁₋₆ alkyl group, and from 90 to 100 mol% in all polymerized units constituting the acrylic polymer (P) is polymerized units derived from methyl methacrylate;
the silyl group-containing acrylic polymer (α) has polymerized units derived from methyl methacrylate (MMA), polymerized units having a hydrolysable silyl group and/or a SiOH group and polymerized units having a hydroxyalkyl group, and from 50 to 95 mol% in all polymerized units constituting the silyl group-containing acrylic polymer (α), is polymerized units derived from methyl methacrylate (MMA); and
the primer layer-forming composition further contains a modified product (X) obtained by reacting a silyl group-containing acrylic polymer (α) and a compound (β) having at least two crosslinkable functional groups reactive with hydroxy groups.

15. The process for producing a resin substrate provided with a hard coating film according to Claim 14, which is used to produce the resin substrate provided with a hard coating film as defined in any one of Claims 1 to 13.
